# EUROPEAN PATENT APPLICATION

(11) **EP 4 414 712 A2**
(43) Date of publication of application: **14.08.2024**
(21) Application number: 24184641.9
(22) Date of filing: 28.07.2022
(51) Int. Cl.: G01N 35/10

(54) **AUTOMATED SYSTEMS AND METHODS FOR LOADING SOLID REAGENT PELLETS INTO WELLS OF A CARTRIDGE**

(30) Priority: 29.07.2021 US 202163227141 P
(62) Divisional of application: 22761675.2
(71) Applicant: Gen-Probe Incorporated, San Diego, CA 92121 (US)
(72) Inventor: SILBERT, Rolf, Del Mar, 92014 (US)
(74) Representative: Script Intellectual Property LLP

(57) **Abstract**

There is described a method for automatically supplying a dried reagent pellet (102) to each well of a cartridge comprising a plurality of wells, wherein the method comprises: (A) automatically positioning a pellet transfer head above a pellet supply reservoir containing a supply of dried reagent pellets, wherein the pellet transfer head comprises (i) a plurality of vacuum nozzles, wherein each vacuum nozzle comprises a downwardly-facing vacuum port in selective communication with a vacuum source and wherein the number and arrangement of the vacuum nozzles corresponds to the number and arrangement of wells of the cartridge and (ii) one or more downwardly-facing pressure ports in selective communication with a pressure source; (B) after step (A), automatically lowering the pellet transfer head to a pellet pickup position with respect to the pellet supply reservoir; (C) with the pellet transfer head in the pellet pickup position, activating the pressure source to supply gas flow at the one or more pressure ports of the pellet transfer head to fluidize the supply of pellets within the pellet supply reservoir and activating the vacuum source to create a vacuum at each vacuum port to draw a pellet from the pellet supply reservoir to each vacuum port; (D) after step (C), automatically raising the pellet transfer head from the pellet pickup position with respect to the pellet supply reservoir; (E) after step (D), automatically positioning the pellet transfer head within a field of view of a vision sensor camera; (F) after step (E), activating the vision sensor camera and a vision sensor system to detect whether a dried reagent pellet is disposed at each of the vacuum nozzles; (G) after step (F), automatically positioning the pellet transfer head above the cartridge so that each vacuum nozzle is aligned with a corresponding well of the cartridge; (H) after step (G), automatically lowering the pellet transfer head to a pellet dispensing position with respect to the cartridge; and (I) after step (H), deactivating the vacuum source to terminate the vacuum at each vacuum port to release the pellet from each vacuum nozzle into the corresponding well of the cartridge.

## Description

### FIELD OF THE DISCLOSURE

This disclosure relates to automated systems and methods for loading solid reagent pellets, such as, for example, lyophilized reagent pellets, into wells of a cartridge, such as a multi-well tray.

### BACKGROUND

Cartridges, or trays, having one or more wells for containing reagent solutions are use in automated analyzers, such as chemical analyzers, molecular analyzers, or other automated instrument capable of performing one or more steps of an assay, including the step of determining the presence or absence of one or more analytes suspected of being present in a fluid sample. For storage and handling purposes, the well(s) of such cartridges are pre-loaded with lyophilized reagent "pellets" prior to their use in the analyzer, and the pellets are reconstituted within the analyzer, or shortly before the cartridge is placed in the analyzer, by exposing the pellet to a reconstitution reagent added to each well of the cartridge.

Reagent pellets may be formed by dispensing droplets of precise volumes of reagent into a cryogenic environment to lyophilize (freeze-dry) each droplet into a solid form (i.e., a pellet). Typically, such lyophilized pellets are small (e.g., 3.3-3.5 mm), lightweight, and generally spherical in shape and, due to their crystalline structure, can be very fragile and brittle. An exemplary process for forming such lyophilized pellets is described in International Patent Publication No. WO/2019/245906.

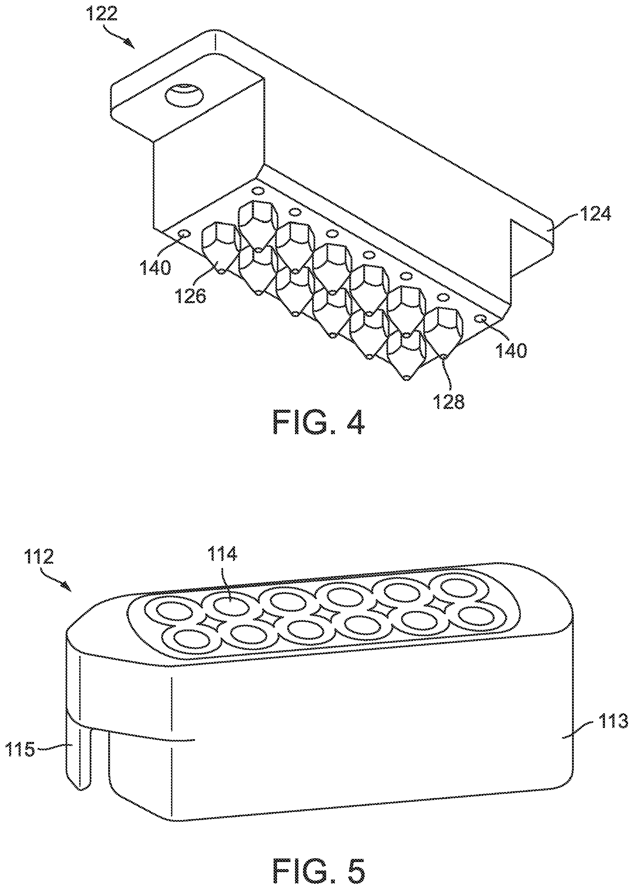

An exemplary cartridge in the form of a multi-well tray that may be used in an automated analyzer with lyophilized reagents is show in FIG. 5. The cartridge 112 includes a body 113 with a plurality of wells 114 open to a top surface of the body 113. The wells 114 are arranged in two rows of six wells 114 each, although other arrangements and numbers of wells are contemplated. The body 113 has a flat bottom so that it may rest on a flat surface and may include a manipulating arm 115 that allows the cartridge 112 to be automatically moved within an analyzer. Examples of cartridges in the form of multi-well trays are described in U.S. Pat. No. 9,566,582,

Loading the wells 114 of a cartridge, such as cartridge 112, with lyophilized reagents requires that a single reagent pellet be transferred from a pellet supply - typically a container of loose, randomly-arranged pellets - to each well 114 of the cartridge. It is important that a pellet, and only one pellet, by loaded into each well of the cartridge. If a well were mistakenly left empty - without a pellet - the solution prepared in that well would be lacking the reagent, so that the results of any assay performed with that solution would be invalid. Similarly, if more than one pellet were placed into a well, the solution prepared in that well would have an inaccurate reagent concentration, so that the results of any assay performed with that solution would also be invalid. By the same token, the process by which reagent pellets are formed occasionally results in pellets that are misshapen during the pellet-forming process - e.g., pellets are too small, multiple pellets are fused together, or pellets may be elongated if a droplet is not cleanly dispensed from a droplet-dispensing nozzle. In addition, due to their fragility, pellets can become cracked or chipped during handling, storage, or a cartridge-loading process. In any case, whether the pellet is misshapen during the pellet forming process or is later cracked or chipped, the volume of the defective pellet is suspect, and the pellet cannot be used due to the possibility that a reagent solution made from that pellet will not have the correct reagent concentration.

Loading pellets into the wells of a cartridge is typically done by hand, so as to not damage the small, lightweight, and fragile pellets and to ensure that one, and only one, pellet is placed in each well of the cartridge. Hand loading also enables the loading technician to perform a visual quality check of each pellet that is loaded into a cartridge well, and to discard misshapen, deformed, broken, or otherwise defective pellets.

Hand loading pellets into cartridge wells can be very time-consuming, especially for cartridges having many wells. In addition, because of the small size of the pellets, defects may not be readily observable to the naked eye. Automated loading of reagent pellets into cartridge wells can increase loading speed, but it is important that the automated pellet-loading machinery itself does not result in damage to individual pellets.

Aspects of the present disclosure describe automated systems and methods for loading pellets into cartridge wells without damaging the fragile reagent pellets and while enabling the detection of defective pellets.

### SUMMARY

This disclosure relates to automated systems and methods for filling multi-well cartridges with lyophilized reagent pellets.

The following presents a simplified summary in order to provide a basic understanding of some aspects described herein. This summary is not an extensive overview of the claimed subject matter. It is intended to neither identify key or critical elements of the claimed subject matter nor delineate the scope thereof. Its sole purpose is to present some concepts in a simplified form as a prelude to the more detailed description that is presented later.

In one aspect, an automated system for loading solid reagent pellets into wells of a cartridge may include a pellet supply reservoir to hold a supply of pellets, a pellet transfer head configured to pneumatically remove a number of pellets from the pellet supply reservoir while holding the pellets in an arrangement matching the arrangement of the wells of the cartridge, a holder for holding the cartridge that will receive the pellets, a vision sensor system for performing vision checks of the cartridge, the pellet transfer head, and individual pellets picked up by the pellet transfer head throughout the transfer process, and a set of mirrors configured and positionable so as to provide the vision sensor a second field of view, thereby allowing the vision sensor to view the pellets on the pellet transfer head and to view the wells of the cartridge. The pellet reservoir, mirrors, and cartridge holder may be mounted on a horizontal carriage assembly that is movable in a horizontal direction by a horizontal actuator system. The pellet transfer head is mounted on a vertical carriage assembly that is movable in a vertical direction by a vertical actuator system. The system may further include a controller for controlling a pneumatic system of the pellet transfer head, the vision sensor, and the horizontal and vertical actuator systems.

In another aspect of the disclosure, the system may include a static eliminator fan to eliminate or reduce static buildup in the pellet reservoir.

In another aspect of the disclosure, the system for loading solid reagent pellets into wells of a cartridge may be situated within a dry environmental housing for maintaining a low-humidity environment and a pellet insertion tube for adding pellets to the pellet supply reservoir inside in the housing.

In another aspect of the disclosure, the system may include means to remove pellets from individual vacuum nozzles of the pellet transfer head.

In another aspect, the disclosure is directed to a method for automatically transferring pellets to a plurality of wells in a cartridge. The method comprises the steps of activating the horizontal actuator system to position the pellet transfer head above the pellet reservoir; activating the vertical actuator system to lower the pellet transfer head into the pellet reservoir; activating one or more pressure ports of the pellet transfer head to blow gas into the pellet supply reservoir and disrupt the supply of pellets within the reservoir; activating vacuum nozzles of the pellet transfer head to create a vacuum at each vacuum port to draw a pellet from the reservoir to each vacuum port; activating the vertical actuator system to raise the pellet transfer head from the reservoir; activating the horizontal actuator system to position the pellet transfer head above a first portion of the mirror while a second
portion of the mirror is within the field of view of the vision sensor system; activating the vision sensor system to detect whether a pellet is disposed at each of the vacuum ports of the pellet transfer head and whether any pellet is defective; activating the horizontal actuator system to position the cartridge within the field of view of the vision sensor system; activating the vision sensor system to detect whether each well of the cartridge is empty and that the correct cartridge has been placed into the system; activating the horizontal actuator system to position the pellet transfer head above the cartridge so that each vacuum nozzle is aligned with a corresponding well of the cartridge; activating the vertical actuator system to lower the pellet transfer head to place each vacuum nozzle near or within the corresponding well of the cartridge; and deactivating the vacuum nozzles to terminate the vacuum at each vacuum port to release the pellet from each vacuum port into the corresponding well of the cartridge.

Aspects of the disclosure include a system for automatically supplying a dried reagent pellet to each well of a cartridge comprising a plurality of wells. The system may include a pellet supply reservoir containing a supply of dried reagent pellets, a cartridge support configured to hold a cartridge, a pellet transfer head disposed above the pellet supply reservoir and a cartridge disposed on the cartridge support, a vertical actuator system configured to selectively move the pellet transfer head up or down, a vision sensor system including a vision sensor camera disposed above the pellet supply reservoir and the cartridge disposed on the cartridge support, a horizontal actuator system configured to effect relative horizontal movement of the vision sensor camera and the pellet transfer head with respect to the pellet supply reservoir and the cartridge support, and a controller connected to the vacuum source, the pressure source, the vertical actuator system, the horizontal actuator system, and the vision sensor system. The pellet transfer head may include a plurality of vacuum nozzles, the number and arrangement of the vacuum nozzles may correspond to the number and arrangement of wells of the cartridge, and each vacuum nozzle includes a downwardly-facing vacuum port in selective communication with a vacuum source. The controller is configured to execute operational commands of a control algorithm, and the operational commands include: (A) activate the horizontal actuator system to position the pellet transfer head above the pellet supply reservoir, (B) after command (A), activate the vertical actuator system to lower the pellet transfer head to a pellet pickup position with respect to the pellet supply reservoir, (C) with the pellet transfer head in the pellet pickup position, activate the vacuum source to create a vacuum at each vacuum port to draw a pellet from the pellet supply reservoir to each vacuum port, (D) after command (C), activate the vertical actuator system to raise the pellet transfer head from the pellet pickup position with respect to the pellet supply reservoir, (E) after command (D), activate the horizontal actuator system to position the pellet transfer head within a field of view of the vision sensor camera, (F) after command (E), activate the vision sensor system to detect whether a dried reagent pellet is disposed at each of the vacuum nozzles, (G)after command (F), activate the horizontal actuator system to position the pellet transfer head above the cartridge so that each vacuum nozzle is aligned with a corresponding well of the cartridge, (H) after command (G), activate the vertical actuator system to lower the pellet transfer head to a pellet dispensing position with respect to the cartridge, and (I) after command (H), deactivate the vacuum source to terminate the vacuum at each vacuum port to release the pellet from each vacuum nozzle into the corresponding well of the cartridge.

According to further aspects of the disclosure, the pellet transfer head may include one or more downwardly-facing pressure ports in selective communication with a pressure source, the controller is connected to the pressure source, and the operational commands include, during command (E), activate the pressure source to supply gas flow at the one or more pressure ports of the pellet transfer head to fluidize the supply of pellets within the pellet supply reservoir.

According to further aspects of the disclosure, the operational commands further include, before command (D), deactivate the pressure source to terminate gas flow at the pressure ports.

According to further aspects of the disclosure, the operational commands further include, before command (G), (J) activate the horizontal actuator system to position the cartridge within the field of view of the vision sensor camera, and (K) activate the vision sensor system to detect at least one of (1) whether each well of the cartridge is empty, and (2) whether a correct cartridge is placed in the cartridge support.

According to further aspects of the disclosure, the system may include a static eliminator fan.

According to further aspects of the disclosure, he pellet supply reservoir and the cartridge support are supported on a horizontal carriage assembly supported for horizontal movement on one or more horizontal tracks, and the horizontal actuator system may include a horizontal actuator motor, a horizontal lead screw operatively coupled to the horizontal actuator motor, and a lead screw nut attached to the horizontal carriage assembly and coupled to the horizontal lead screw.

According to further aspects of the disclosure, the system may include a horizontal home sensor configured to detect when the horizontal carriage assembly is in a horizontal home position.

According to further aspects of the disclosure, the pellet transfer head is supported on a vertical carriage assembly supported for vertical movement on one or more vertical tracks, and the vertical actuator system may include a vertical actuator motor, a vertical lead screw operatively coupled to the vertical actuator motor, and a lead screw nut attached to the vertical carriage assembly and coupled to the vertical lead screw.

According to further aspects of the disclosure, the vertical carriage assembly may include a vertical carriage mount supported on the one or more vertical tracks by a linear slide associated with each vertical track and a transfer head mounting bracket attached to the vertical carriage mount, and the pellet transfer head is attached to the transfer head mounting bracket.

According to further aspects of the disclosure, the system may include a vertical home sensor configured to detect when the vertical carriage assembly is in a vertical home position.

According to further aspects of the disclosure, the vision sensor camera has a downward field of view, the system may include an upwardly-facing mirror disposed beneath the vision sensor camera and the pellet transfer head, and the pellet transfer head is within the field of view of the vision sensor camera when the pellet transfer head is positioned above a first portion of the mirror while a second portion of the mirror is within the field of view of the vision sensor camera.

According to further aspects of the disclosure, the first portion of the mirror may include a first mirror and the second portion of the mirror may include a second mirror disposed at an angle with respect to the first mirror.

According to further aspects of the disclosure, the plurality of vacuum nozzles of the pellet transfer head are arranged in at least two rows of vacuum nozzles, each row comprising a plurality of vacuum nozzles.

According to further aspects of the disclosure, the system may include an environmentally-controlled housing, wherein at least the pellet supply reservoir, the cartridge support, and the pellet transfer head are disposed within the housing.

According to further aspects of the disclosure, the system may include a pellet insertion tube including a pipe extending through a wall of the housing with a proximal end of the pipe situated outside the housing and a distal end of the pipe situated inside the housing, a funnel attachment at a proximal end of the pipe, and a bracket attached the wall of the housing for holding the pipe at an incline.

According to further aspects of the disclosure, the vision sensor system is configured to detect whether more than one dried reagent pellet, a misshapen dried reagent pellet, or a broken dried reagent pellet is disposed at any of the vacuum nozzles, and command (F) includes activating the vision sensor camera and the vision system to detect whether more than one dried reagent pellet, a misshapen dried reagent pellet, or a broken dried reagent pellet is disposed at any of the vacuum nozzles.

Aspects of the disclosure include a method for automatically supplying a dried reagent pellet to each well of a cartridge comprising a plurality of wells. The method may include (A) automatically positioning a pellet transfer head above a pellet supply reservoir containing a supply of dried reagent pellets, and the pellet transfer head may include a plurality of vacuum nozzles, the number and arrangement of the vacuum nozzles corresponds to the number and arrangement of wells of the cartridge, and each vacuum nozzle may include a downwardly-facing vacuum port in selective communication with a vacuum source, (B) after step(A), automatically lowering the pellet transfer head to a pellet pickup position with respect to the pellet supply reservoir, (C) with the pellet transfer head in the pellet pickup position, activating the vacuum source to create a vacuum at each vacuum port to draw a pellet from the pellet supply reservoir to each vacuum port, (D) after step (C), automatically raising the pellet transfer head from the pellet pickup position with respect to the pellet supply reservoir, (E) after step (D), automatically positioning the pellet transfer head within a field of view of a vision sensor camera, (F) after step (E), activating the vision sensor camera and a vision sensor system to detect whether a dried reagent pellet is disposed at each of the vacuum nozzles, (G) after step (F), automatically positioning the pellet transfer head above the cartridge so that each vacuum nozzle is aligned with a corresponding well of the cartridge, (H) after step (G), automatically lowering the pellet transfer head to a pellet dispensing position with respect to the cartridge, and (I) after step (H), deactivating the vacuum source to terminate the vacuum at each vacuum port to release the pellet from each vacuum nozzle into the corresponding well of the cartridge.

According to further aspects of the disclosure, the pellet transfer head may include one or more downwardly-facing pressure ports in selective communication with a pressure source, and the method may include, during step (C), activating the pressure source to supply gas flow at the one or more pressure ports of the pellet transfer head to fluidize the supply of pellets within the pellet supply reservoir.

According to further aspects of the disclosure, the method may include, before step (D), deactivating the pressure source to terminate gas flow at the pressure ports.

According to further aspects of the disclosure, the method may include before step (G), (J) automatically positioning the cartridge within the field of view of the vision sensor camera, and (K) activating the vision sensor system to detect at least one of (1) whether each well of the cartridge is empty, and (2) whether a correct cartridge is placed in the cartridge support.

According to further aspects of the disclosure, comprising directing a static eliminator fan at the pellet supply reservoir.

According to further aspects of the disclosure, the cartridge is supported on a cartridge support, and the pellet supply reservoir and the cartridge support are supported on a horizontal carriage assembly supported for horizontal movement on one or more horizontal tracks, and steps (A), (E), and (G) may include moving the horizontal carriage assembly by rotating a horizontal lead screw with a horizontal actuator motor, and the horizontal lead screw is operatively coupled to a lead screw nut attached to the horizontal carriage assembly.

According to further aspects of the disclosure, the method may include detecting when the horizontal carriage assembly is in a horizontal home position with a horizontal home sensor.

According to further aspects of the disclosure, the pellet transfer head is supported on a vertical carriage assembly supported for vertical movement on one or more vertical tracks, and steps (B), (D), and (H) include moving the vertical carriage assembly by rotating a vertical lead screw with a vertical actuator motor, and the vertical lead screw is operatively coupled to a lead screw nut attached to the vertical carriage assembly.

According to further aspects of the disclosure, the method may include detecting when the vertical carriage assembly is in a vertical home position with a vertical home sensor.

According to further aspects of the disclosure, step (E) may include automatically positioning the pellet transfer head above a first portion of a mirror while a second portion of the mirror is within the field of view of the vision sensor camera, and the first portion of the mirror may include a first mirror and the second portion of the mirror may include a second mirror disposed at an angle with respect to the first mirror.

According to further aspects of the disclosure, the plurality of vacuum nozzles of the pellet transfer head are arranged in at least two rows of vacuum nozzles, each row including a plurality of vacuum nozzles.

According to further aspects of the disclosure, at least the pellet supply reservoir, the cartridge support, and the pellet transfer head are disposed within an environmentally-controlled housing, and the method may include transferring pellets from outside the housing to the pellet supply reservoir within the housing.

According to further aspects of the disclosure, the method may include transferring pellets from outside the housing to the pellet supply reservoir within the housing with a pellet insertion tube. The pellet insertion tube may include a pipe extending through a wall of the housing with a proximal end of the pipe situated outside the housing and a distal end of the pipe situated inside the housing, a funnel attachment at a proximal end of the pipe, and a bracket attached the wall of the housing for holding the pipe at an incline.

According to further aspects of the disclosure, step (F) may include activating the vision sensor camera and the vision sensor system to detect whether more than one dried reagent pellet, a misshapen dried reagent pellet, or a broken dried reagent pellet is disposed at any of the vacuum nozzles.

Other features and characteristics of the subject matter of this disclosure, as well as the methods of operation, functions of related elements of structure and the combination of parts, and economies of manufacture, will become more apparent upon consideration of the following description and the appended claims with reference to the accompanying drawings, all of which form a part of this specification, wherein like reference numerals designate corresponding parts in the various figures.

### BRIEF DESCRIPTION OF THE DRAWINGS

The accompanying drawings, which are incorporated herein and form part of the specification, illustrate various embodiments of the subject matter of this disclosure. In the drawings, like reference numbers indicate identical or functionally similar elements.
FIG. 1 is a perspective view of an automated system for loading solid reagent pellets into wells of a cartridge.
FIG. 2 is a top perspective view of the system.
FIG. 3 is a bottom perspective view of the system.
FIG. 4 is a bottom perspective view of a pellet transfer head of the system.
FIG. 5 is a top perspective view of an exemplary multi-well cartridge for receiving solid reagent pellets via the system.
FIG. 6 is a perspective view of a pellet transfer head with a cluster of pellets attached to a nozzle.
FIGS. 7-9 are perspective views of a pellet transfer head with various misshaped pellets attached to a nozzle.
FIG. 10 is a perspective view of a pellet transfer head with a broken pellet attached to a nozzle.
FIGS. 11 and 12 are views of the system disposed within an environmentally controlled housing and a pellet insertion tube.
FIG. 13 is a block diagram that schematically illustrates a control architecture for the system.
FIGS. 14A to 14F are front views of the system at different stages of an exemplary loading cycle.
FIG. 15 is a flow chart illustrating an algorithm for a pellet loading cycle using the system.

### DETAILED DESCRIPTION

While aspects of the subject matter of the present disclosure may be embodied in a variety of forms, the following description and accompanying drawings are intended to disclose some of these forms as specific examples of the subject matter. The subject matter of this disclosure is not intended to be limited to the forms or embodiments so described and illustrated.

### Definitions

Unless defined otherwise, all terms of art, notations and other technical terms or terminology used herein have the same meaning as is commonly understood by one of ordinary skill in the art to which this disclosure belongs. All patents, applications, published applications and other publications referred to herein are incorporated by reference in their entirety. If a definition set forth in this section is contrary to or otherwise inconsistent with a definition set forth in the patents, applications, published applications, and other publications that are herein incorporated by reference, the definition set forth in this section prevails over the definition that is incorporated herein by reference.

Unless otherwise indicated or the context suggests otherwise, as used herein, "a" or "an" means "at least one" or "one or more."

This description may use various terms describing relative spatial arrangements and/or orientations or directions in describing the position and/or orientation of a component, apparatus, location, feature, or a portion thereof or direction of movement, force, or other dynamic action. Unless specifically stated, or otherwise dictated by the context of the description, such terms, including, without limitation, top, bottom, above, below, under, on top of, upper, lower, left, right, in front of, behind, beneath, next to, adjacent, between, horizontal, vertical, diagonal, longitudinal, transverse, radial, axial, clockwise, counter-clockwise, etc., are used for convenience in referring to such component, apparatus, location, feature, or a portion thereof or movement, force, or other dynamic action in the drawings and are not intended to be limiting.

Unless otherwise indicated, or the context suggests otherwise, terms used herein to describe a physical and/or spatial relationship between a first component, structure, or portion thereof and a second component, structure, or portion thereof, such as, attached, connected, fixed, joined, linked, coupled, or similar terms or variations of such terms, shall encompass both a direct relationship in which the first component, structure, or portion thereof is in direct contact with the second component, structure, or portion thereof or there are one or more intervening components, structures, or portions thereof between the first component, structure, or portion thereof and the second component, structure, or portion thereof.

Unless otherwise stated, any specific dimensions mentioned in this description are merely representative of an exemplary implementation of a system embodying aspects of the disclosure and are not intended to be limiting.

To the extent used herein, the term "about" applies to all numeric values and terms indicating specific physical orientations or relationships such as horizontal, vertical, parallel, perpendicular, concentric, or similar terms, specified herein, whether or not explicitly indicated. This term generally refers to a range of numbers, orientations, and relationships that one of ordinary skill in the art would consider as a reasonable amount of deviation from the recited numeric values, orientations, and relationships (i.e., having the equivalent function or result) in the context of the present disclosure. For example, and not intended to be limiting, this term can be construed as including a deviation of ±10 percent of the given numeric value, orientation, or relationship, provided such a deviation does not alter the end function or result of the stated value, orientation, or relationship. Therefore, under some circumstances as would be appreciated by one of ordinary skill in the art a value of about 1% can be construed to be a range from 0.9% to 1.1%.

To the extent used herein, the term "adjacent" refers to being near (spatial proximity) or adjoining. Adjacent objects can be spaced apart from one another or can be in actual or direct contact with one another. In some instances, adjacent objects can be coupled to one another or can be formed integrally with one another.

To the extent used herein, the terms "substantially" and "substantial" refer to a considerable degree or extent. When used in conjunction with, for example, an event, circumstance, characteristic, or property, the terms can refer to instances in which the event, circumstance, characteristic, or property occurs precisely as stated as well as instances in which the event, circumstance, characteristic, or property occurs to a close approximation, such as accounting for typical tolerance levels or variability of the embodiments described herein.

To the extent used herein, the terms "optional" and "optionally" mean that the subsequently described, component, structure, element, event, circumstance, characteristic, property, etc. may or may not be included or occur and that the description includes instances where the component, structure, element, event, circumstance, characteristic, property, etc. is included or occurs and instances in which it is not or does not.

As used herein, the term "reagent" refers to a substance or mixture for use in a biological, chemical and/or biochemical reaction.

As used herein, the term "lyophilized" refers to a process by which a material to be dried is first frozen and then the ice or frozen solvent is removed by sublimation in a vacuum environment. "Lyophilisate" refers to lyophilized material. A "lyophilized reagent" is a lyophilisate comprising at least one reagent.

All possible combinations of elements and components described in the specification or recited in the claims are contemplated and considered to be part of this disclosure. It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

Aspects of the subject matter disclosed herein may be implemented via control and computing hardware components, software (which may include firmware), data input components, and data output components. Hardware components include computing and control modules (e.g., system controllers)), such as microprocessors, embedded controllers, application specific integrated circuits (ASICS), and computers, configured to effect computational and/or control steps by receiving one or more input values, executing one or more algorithms stored on non-transitory machine-readable media (e.g., software) that provide instruction for manipulating or otherwise acting on or in response to the input values, and output one or more output values. Such outputs may be displayed or otherwise indicated to a user for providing information to the user, for example information as to the status of the instrument or of a process being performed thereby, or such outputs may comprise inputs to other processes and/or control algorithms. Data input components comprise elements by which data is input for use by the control and computing hardware components. Such data inputs may comprise signals generated by sensors or scanners, such as, position sensors, speed sensors, accelerometers, environmental (e.g., temperature) sensors, motor encoders, barcode scanners, or RFID scanners, as well as manual input elements, such as keyboards, stylus-based input devices, touch screens, microphones, switches, manually-operated scanners, etc. Data inputs may further include data retrieved from memory. Data output components may comprise hard drives or other storage media, monitors, printers, indicator lights, or audible signal elements (e.g., chime, buzzer, horn, bell, etc.).

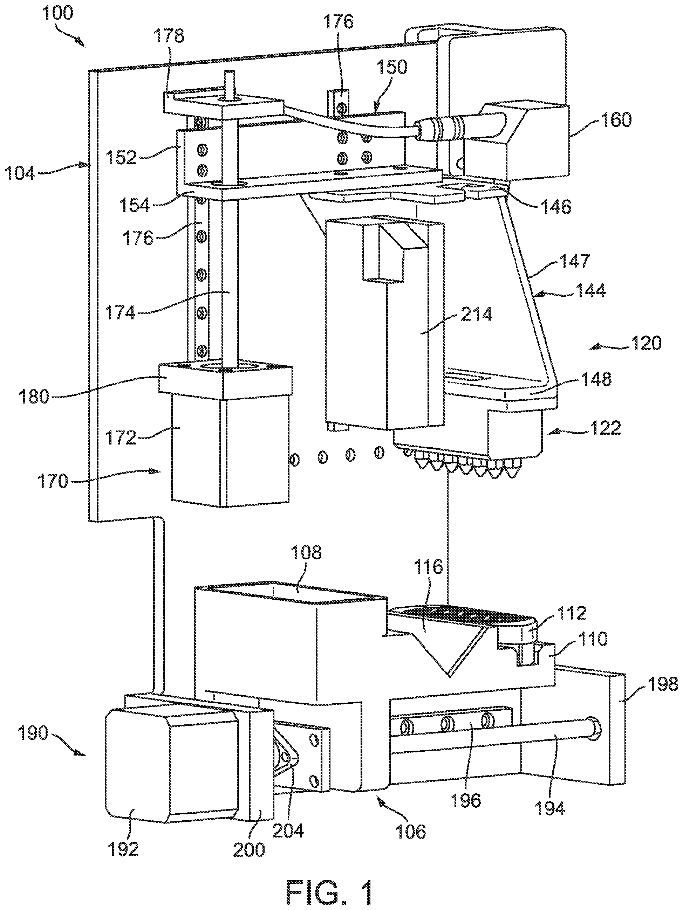

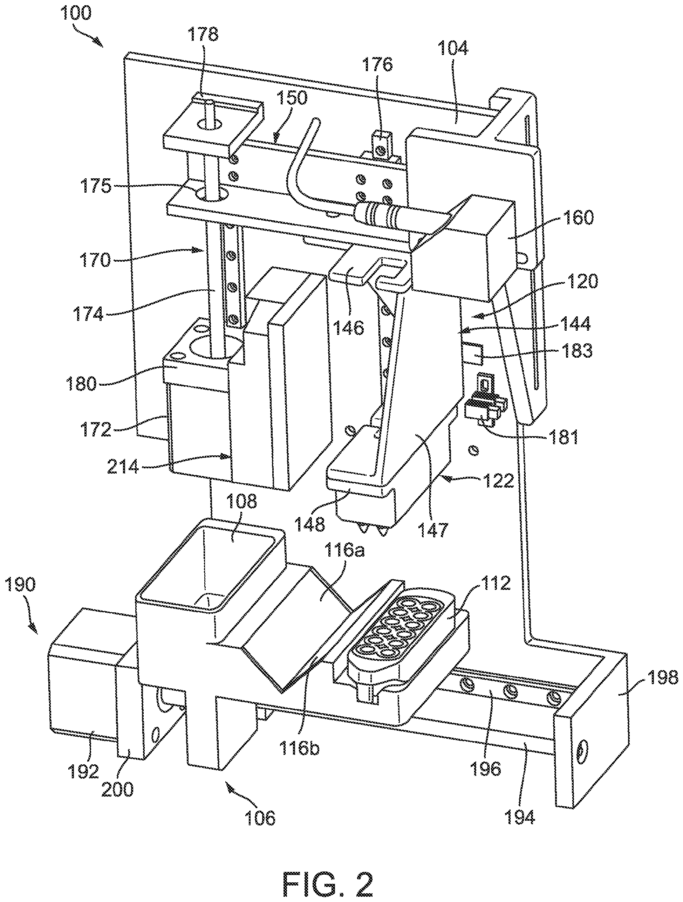

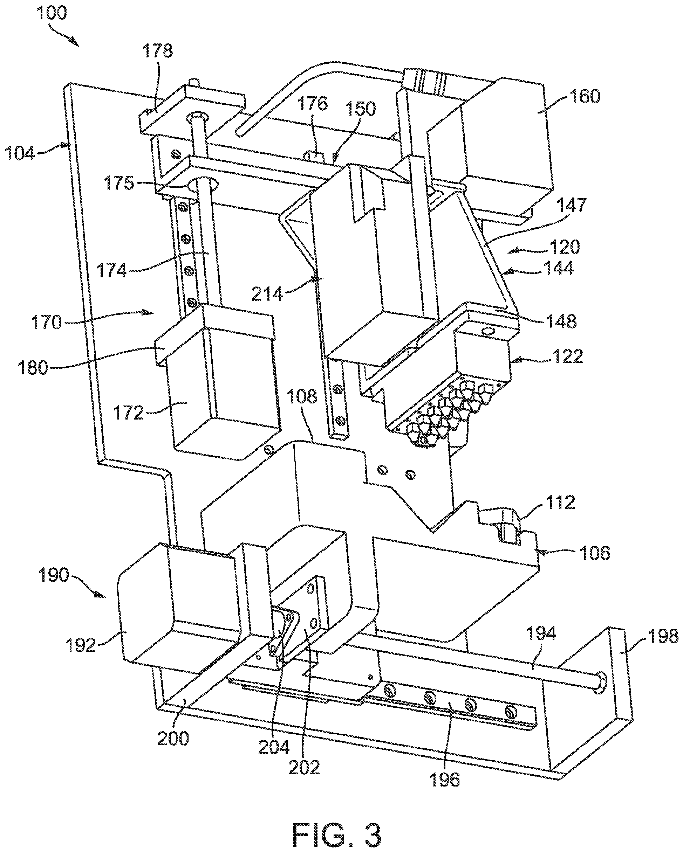

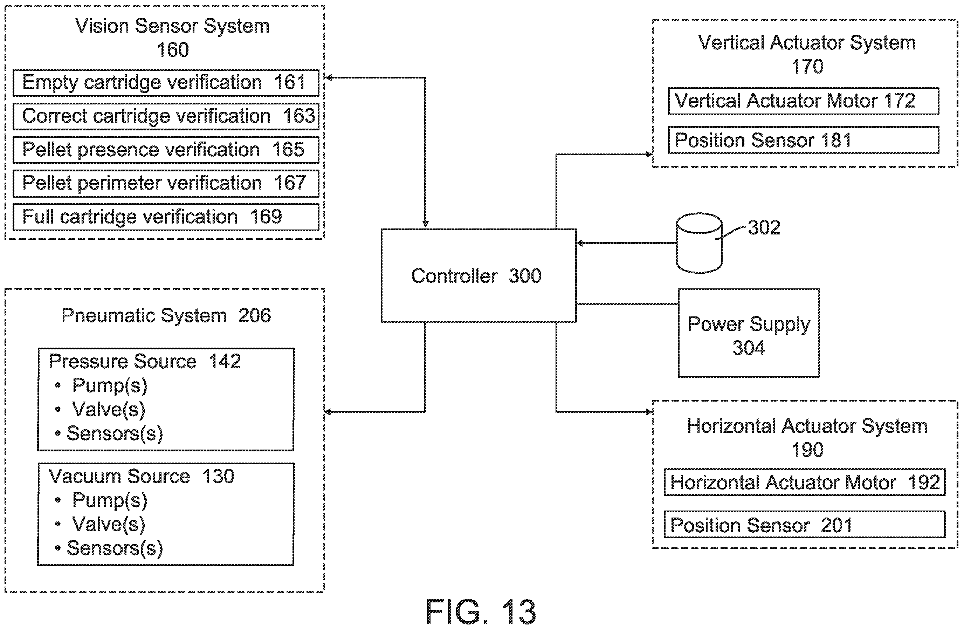

An automated system 100 for loading solid reagent pellets into wells of a cartridge is shown in FIGS. 1-3. System 100 includes a pellet transfer head 122 supported for vertical movement on a vertical carriage assembly 120 mounted to a back plate 104, a vision sensor camera 160 fixed with respect to the back plate 104, and a pellet supply reservoir 108, one or more vision sensor redirection mirrors 116, and a cartridge support, or holder, 110 in which a cartridge 112 may be removably placed. The pellet supply reservoir 108, mirrors 116, and cartridge support 110 are supported for horizontal movement on a horizontal carriage assembly 106. Pellet supply reservoir 108 may comprise an upwardly-open box for holding a supply of loose, randomly-arranged pellets 102. Vision sensor camera 160 is part of a vision sensor system for performing various visual checks throughout a process of transferring pellets 102 from the reservoir 108 to the cartridge 112. The one or more mirrors 116 are oriented and positionable to allow the vision sensor camera 160, which is positioned to have a field of view in one direction (e.g., downwardly) to view the upwardly-facing wells 114 of the cartridge 112, to also have a field of view in a different direction (e.g., upwardly) to view pellets 102 on the bottom of the pellet transfer head 122. System 100 may further include a horizontal actuator system 190, for effecting powered, horizontal movement of the horizontal carriage assembly 106, and a vertical actuator system 170, for effecting powered, vertical movement of the vertical carriage assembly 120. The system further includes a controller 300 (see FIG. 13) for controlling a pneumatic system 206 coupled, or connected to, the pellet transfer head 122, the vision sensor camera 160 and vision sensor system, and the vertical and horizontal actuator systems 170, 190 that move the vertical carriage assembly 120 and the horizontal carriage assembly 106.

Embodiments of the system 100 may optionally include a static eliminator fan 214, which may be fixed with respect to the base back plate 104 and may be directed downwardly toward the pellet supply reservoir for reducing static buildup in pellet supply reservoir 108. The controller 300 may also control the static eliminator fan 214.

The individual components, assemblies, and subassemblies of the system 100 are described in more detail herein.

### Transfer Head

Referring to FIG. 4, the pellet transfer head 122 may include a transfer head body 124 with an array of downwardly-directed vacuum nozzles 126. Transfer head body 124 may have a generally rectangular shape, generally matching, but smaller than, the shape and dimensions of the pellet supply reservoir 108, with one or more mounting flanges at the top of the body 124. The number and arrangement of vacuum nozzles 126 corresponds to the number and arrangement of wells 114 of the cartridge 112. In the illustrated embodiment, the transfer head 122 includes two rows of six nozzles 126 corresponding to two rows of six wells 114 of a cartridge 112. The transfer head 122 may have a different arrangement and/or number of nozzles 126 corresponding to a differently configured cartridge 112.

Each of the vacuum nozzles 126 includes a frustoconical tip with a downwardly facing vacuum port 128 at the end of the nozzle 126. The vacuum ports 128 are connected to a vacuum source (e.g., a pump, not shown in FIGS. 1-4) via one or more pressure/vacuum lines (not shown) connecting the pellet transfer head 122 and the vacuum source, which supplies negative air pressure (e.g., a vacuum) to the vacuum ports 128. In an embodiment, the pellet transfer head 122 may be interchangeable so that differently-configured pellet transfer heads for differently-configured cartridges 112 may be employed.

The pellet transfer head 122 may also include a plurality of pressure ports 140 extending along opposite sides of the transfer head body 124 and positioned outward from the vacuum nozzles 126. The pressure ports 140 are connected to a pressure source 142 (e.g., a pump, not shown in FIGS. 1-4) via one or more pressure lines (not shown) connecting the pellet transfer head 122 and the pressure source 142 to supply gas discharge - for example, nitrogen, air, inert gas, or other gas - through the pressure ports 140.

The pellet transfer head 122 is used to extract pellets 102 from the pellet supply reservoir 108 and transfer the pellets 102 into the wells 114 of a cartridge 112 by picking up a precise number of pellets in a spatial arrangement matching that of the wells 114 of the cartridge 112. To pick up pellets, the pellet transfer head is positioned within the pellet supply reservoir 108 and negative pressure (vacuum) is applied at the vacuum nozzles 126 to draw one loose pellet 102 from the supply of loose pellets within the pellet supply reservoir 108 to the vacuum port 128 of each of the vacuum nozzles 126. In embodiments where the pellets 102 are especially fragile, contact by the vacuum nozzles 126 may damage the pellets. Accordingly, the pellet transfer head 122 may be positioned with respect to the pellet supply reservoir with the vacuum nozzles 126 spaced a short distance from the top layer of pellets 102 within the reservoir 108 (e.g., about 5 mm ±1 mm). If the amount of vacuum supplied at the vacuum nozzles 126 is insufficient to pick up pellets 102 when the nozzles 126 are positioned at a distance above the pellets 102, pressure ports 140 on the pellet transfer head 122 may discharge pressurized gas (e.g., about 10 psi) into the pellet supply reservoir 108 to cause the loose pellets 102 to move in a fluidized manner and "float" upwardly towards the vacuum nozzles 126 so that the vacuum pressure is able to hold a pellet to each vacuum nozzle 126. On the other hand the pressure ports 140 may be omitted if the vacuum from the vacuum nozzles 126 is sufficient to pick up the pellet 102 from a distance. The pellet transfer head 122 may remain in the reservoir 108 for a set amount of time (e.g., 2.5 seconds) that is sufficient to retain a pellet 102 on each vacuum nozzle 126 and is the raised from the pellet supply reservoir 108. In an embodiment, the system 100 may include flow sensors (not shown) connected to vacuum line(s) of the pellet transfer head 122 to detect the flow through the vacuum nozzles 126. When the flow through each vacuum nozzle 126 substantially decreases-indicating that a pellet 102 is attached to each vacuum nozzle 126-the pellet transfer head 122 may be raised from the pellet supply reservoir 108.

In addition to negative air pressure (e.g., a vacuum), the vacuum ports 128 of the vacuum nozzles 126 may also be selectively connected to the pressure source 142 to supply positive air pressure through the vacuum ports. This allows for the use of pressurized gas to unclog blocked ports 128.

The three gas sources (negative air pressure through the vacuum ports 128 of the nozzles 126, pressurized gas through the nozzles 126, and pressurized gas through pressure ports 140, may include pumps and valves (e.g., solenoid valves) controlled by the controller. For example, the solenoid valves may be operatively coupled to controller inputs for motors of the horizontal actuator system 190 and vertical actuator system 170 (described in more detail below). In one embodiment, the solenoid valves of the gas sources are normally closed and must be actuated to allow gas to flow.

### Vertical Carriage Assembly

Referring to FIGS. 1-3, the vertical carriage assembly 120, which supports the pellet transfer head 122, may include a transfer head mounting bracket 144 secured to a vertical carriage mount 150, which may have a vertical part 152 and a horizontal part 154. The transfer head mounting bracket 144 may include a lower plate 148 and a top plate 146 that may be substantially parallel with each other and which are connected by a vertical plate 147. The pellet transfer head 122 may be mounted to the lower plate 148 of the transfer head mounting bracket 144 and the top plate 146 of the transfer head mounting bracket 144 may be attached to the horizontal part 154 of the vertical carriage mount 150. The lower plate 148 and the top plate 146 may optionally contain openings to allow for the passage of components, such as wires, cables, and/or tubes (pressure hoses), to the pellet transfer head 122.

The vertical carriage assembly 120 is configured for vertical translation of the transfer head 122 in an up or down direction via vertically-oriented linear tracks 176 that are mounted to a back plate 104. The vertical carriage mount 150 is supported on the tracks 176 for vertical translation via linear bearings or slide blocks attached to the vertical part 152 of the vertical carriage mount 150.

A vertical actuator system 170 is configured to effect powered, vertical movement of the vertical carriage mount 150. The vertical actuator system 170 includes a vertical actuator motor 172 supported on a motor mount 180 attached to the back plate 104, a vertical lead screw 174 operatively coupled to the vertical actuator motor 172 for powered rotation by the motor, a lead screw nut 175 mounted to the vertical carriage mount 150 and coupled to the lead screw 174, and a lead screw bearing (not shown) mounted in a bearing plate 178 attached to the back plate 104 and rotatably supporting a free end of the lead screw 174. Accordingly, rotation of the lead screw 174 by vertical actuator motor 172 causes the vertical carriage assembly120 to move bi-directionally in an up or down direction along the vertically-oriented linear tracks 176.

Vertical actuator motor 172 may be a stepper motor and may include a rotary encoder.

A position sensor 181, such as an optical sensor, may be used to detect a vertical carriage assembly 120 position flag 183 extending from the transfer head mounting bracket 144 to detect when the transfer head mounting bracket 144 and transfer head 122 mounted thereto are in a specified vertical position (e.g., a vertical "home position"). Alternatively, a contact or pressure switch may be mounted to the back plate 104 and used to detect when the transfer head mounting bracket 144 and transfer head 122 mounted thereto are in a specified vertical position.

The height of the top layer of pellets 102 within the pellet supply reservoir 108 changes as pellets are removed from the reservoir with each cycle of transfer process. Accordingly, in one embodiment, the vertical actuator system 170 accounts for the change in pellet 102 height in the pellet supply reservoir 108 by lowering the pellet transfer head 122 further into the pellet supply reservoir 108 after each successive pellet transfer cycle so as to maintain the preferred spacing between the ends of the vacuum nozzles 126 and the top of the pellets. The change in pellet 102 height in the pellet supply reservoir 108 after each cycle may be determined based on the volume of pellets 102 removed in each cycle and the dimensions of the pellet supply reservoir 108.

### Horizontal Carriage Assembly

System 100 includes a horizontal carriage assembly 106 that moves along a horizontal axis beneath the vertical carriage assembly 120. The horizontal carriage assembly 106 supports the pellet supply reservoir 108, the one or more mirrors 116, and the cartridge support 110, which comprises a recess or well that receives a cartridge 112 and retains the cartridge 112 for horizontal movement with the horizontal carriage assembly 106.

The horizontal carriage assembly 106 is configured for horizontal translation on one or more horizontally-oriented linear tracks 196 that are mounted to the back plate 104, and the horizontal carriage assembly 106 may be supported on the tracks 196 for horizontal translation via linear bearings or slide blocks. The movement of the horizontal carriage assembly 106 relative to the pellet transfer head 122 and vision sensor camera 160 allows for operative, relative positioning of the pellet supply reservoir 108, the one or more mirrors 116, and the cartridge 112 relative to (e.g., beneath) the pellet transfer head 122 and/or the vision sensor camera 160. In an alternate embodiment, the pellet supply reservoir 108, the one or more mirrors 116, and the cartridge support 110 and cartridge 112 are held stationary and the pellet transfer head 122 and vision sensor camera 160 are moved horizontally to achieve the proper relative positioning.

The system 100 includes a horizontal actuator system 190 that is configured to effect powered, horizontal translation of the horizontal carriage assembly 106 in a left or right direction. The horizontal actuator system 190 includes a horizontal actuator motor 192 supported on a motor mount 200 attached to the back plate 104, a horizontal lead screw 194 operatively coupled to the motor 192 for powered rotation by the motor, a lead screw nut 204 mounted to the horizontal carriage assembly 106 via a lead screw nut mount 202 and coupled to the lead screw 194, and a lead screw bearing (not shown) mounted in a bearing plate 198 attached to the back plate 104 and rotatably supporting a free end of the lead screw 194. Accordingly, rotation of the lead screw 194 by horizontal actuator motor 192 causes the horizontal carriage assembly 106 to move bi-directionally in a left or right direction along the horizontally-oriented linear track(s) 196.

The horizontal actuator motor 192 may be a stepper motor and may include a rotary encoder.

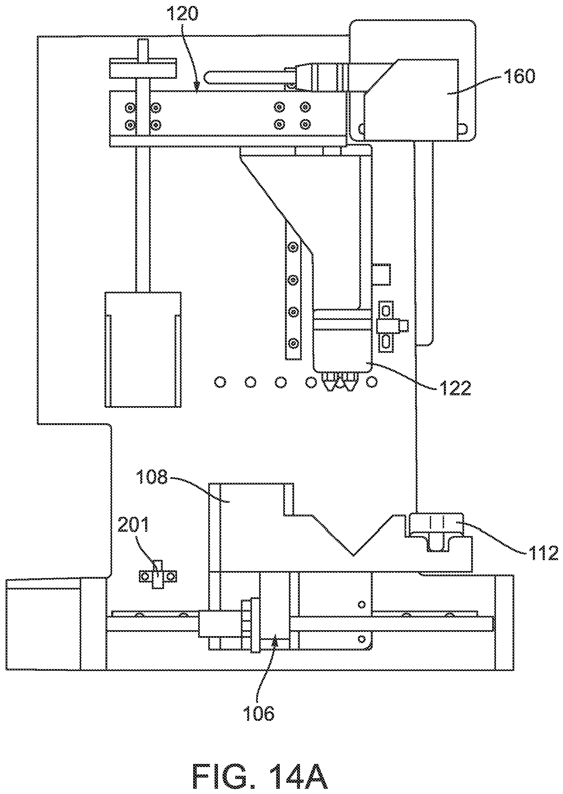

A position sensor 201 (see FIG. 14A), such as an optical sensor, may be used to detect a carriage assembly 106 position flag (not shown) extending from the carriage assembly 106 to detect when the carriage assembly is in a specified horizontal position (e.g., a horizontal "home" position). Alternatively, a contact or pressure switch may be mounted to the back plate 104 and used to detect when carriage assembly 106 is in a specified horizontal position.

### Vision Sensor

System 100 includes a vision sensor system including a vision sensor camera 160 and associated software configured to perform various system vision checks. Note that in this detailed description, reference number 160 may designate the vision sensor camera alone, or it may designate the vision sensor camera and the vision sensor system (i.e., the associated software) collectively. In an embodiment, the vision sensor camera 160 is attached, in a fixed position, to the back plate 104 with a downwardly-directed field of view. The vision checks performed by the vision sensor system 160 include, but are not limited to, checking whether each of the wells 114 of the cartridge 112 is empty prior to a pellet transfer cycle ("empty cartridge verification"), checking whether the correct cartridge 112 is placed on the cartridge support 110 by checking if the cartridge has the correct label and/or the correct number and arrangement of wells 114 or checking other visibly distinguishable characteristics of the cartridge ("correct cartridge verification"), checking whether a pellet of the correct size 102 is present on each of the vacuum nozzles 126 after pellet pickup ("pellet presence verification"), checking the perimeter of each of the pellets 102 to identify defective (e.g., deformed, misshapen, broken) pellets ("pellet perimeter verification"), and checking whether each of the wells 114 in the cartridge 112 contains a pellet 102 after a pellet transfer cycle ("full cartridge verification"). Note that both pellet size and perimeter may be checked in the same vision check (e.g., during pellet perimeter verification). The vision sensor system 160 uses one or more tools - such as an outline tool, diameter tool, or perimeter tool - in performing the checks. An exemplary vision sensor camera includes a Keyence IV2-G500MA. Such tools are standard for commercially available vision systems or vision sensors. To employ such tools, the vision sensor is programmed to detect certain shapes, attributes (e.g., color or brightness), and/or features in specific areas of an image. The sensor will attempt to detect those shapes/attributes/features using matching criteria and algorithms. When the sensor detects something that is close to shapes/attributes/features it has been programmed to detect, the sensor will return a set of metrics (e.g., count, diameter, perimeter, color, height, width, etc.). Such metrics can then be passed through additional programmable criteria (e.g., comparisons to predefined values of the returned metrics) to either return a "match" or trigger some event (e.g., an error, trigger an electrical signal that performs a physical action, log data, etc.).

As part of an empty cartridge verification, the horizontal actuator system 190 is controlled/instructed to move the horizontal carriage assembly 106 to position the cartridge support 110 of the carriage assembly 106 beneath the vision sensor camera 160 (see FIG. 14A) in the field of view of the camera 160, and the vision sensor system may check whether an empty cartridge 112 has been loaded onto the cartridge support 110 in the carriage assembly 106. By leveraging a color or reflectivity contrast between the pellet 102 and the cartridge 112, an empty cartridge verification may be performed, for example, by checking the outline of the cartridge 112 and the relative brightness levels detected by the vision sensor camera 160 for each of the wells 114 if the pellet is a lighter color than the cartridge. For example, if the vision sensor system 160 determines that one or more wells 114 has an average brightness level that is higher than a specified, threshold level or is substantially different from the average brightness of other wells 114, the vision sensor system 160 may indicate that the cartridge 112 is not empty. The empty cartridge verification passes if an empty cartridge 112 is present and fails if either no cartridge 112 is present (e.g., if it does not detect the cartridge outline) or if one or more cartridge wells 114 are not empty.

As part of a correct cartridge verification, with the cartridge support 110 of the carriage assembly 106 still beneath the vision sensor camera 160, the vision sensor camera 160 may check whether a cartridge has the correct label and/or the correct number and arrangement of wells 114. The vision sensor 160 may check the outline of the label to determine whether the label on the cartridge matches a predesignated, correct label. The outline of the label may be checked by, for example, using OCR to read alphanumeric characters of the label (e.g., a serial number, a lot number, a material number, an expiration date, branding information, etc.), scanning a barcode, comparing the label image to a designated label image, validating the cleanliness of the label, validating the color and contrast of the label, validating that no duplicate labels are detected, or other methods known in the art. The correct cartridge verification passes if the correct label is detected and fails if either no label is present or if an incorrect label is detected. During the correct cartridge verification, the vision sensor system 160 system may also check the outline of the wells 114 to determine whether the number and arrangement of wells 114 is correct. Alternatively, this check may be done as part of the empty cartridge verification. The correct cartridge verification passes if the correct number and arrangement of wells 114 is detected and fails if either the number of wells 114 or arrangement of wells 114 is incorrect.

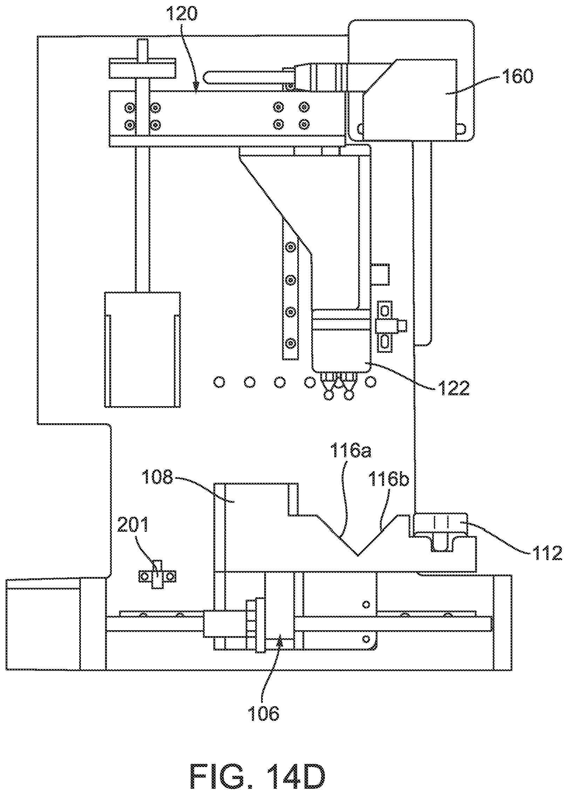

As part of a pellet presence verification, the vision sensor camera 160 and vision sensor system may be used to verify whether a pellet 102 is present on each nozzle 126 after a pellet pickup step is performed by the pellet transfer head 122. In an embodiment, the one or more mirrors 116 are arranged on the carriage assembly 106 such that the downwardly-directed vacuum nozzles 126 on the pellet transfer head 122 may be within the field of view of the downwardly-directed vision sensor camera 160. For example, the mirrors 116 may include two mirrors 116a, 116b, each oriented at about 45 degrees with respect to horizontal and 90 degrees with respect to each other, and the horizontal spacing between the pellet transfer head 122 and the vision sensor camera 160 is such that when the pellet transfer head 122 is positioned above one mirror 116a, the bottom of the pellet transfer head 122 (i.e., the vacuum nozzles 126) is within the field of view of the vision sensor camera 160 via the second mirror 116b. Thus, in one example of the pellet presence verification, after the pellet transfer head 122 is raised out of the pellet supply reservoir 108, the horizontal actuator system 190 is controlled/instructed to move the horizontal carriage assembly 106 to position mirror 116a beneath the pellet transfer head 122 (see FIG. 14D), in which case mirror 116b will be in the field of view of vision sensor camera 160. The vision sensor camera 160 and vision sensor system may be used to check the outline of the pellets 102 to determine the presence of a pellet 102 on each nozzle 126 using the vision sensor diameter tool. The pellet presence verification passes if a pellet 102 is present on each nozzle 126 and all the pellets fall within a specified size (e.g., diameter) range. The pellet presence verification fails if one or more nozzles 126 do not have a pellet 102 attached and/or the size of one or more pellets does not fall within the specified size (e.g., diameter) range.

In some instances, even a misshapen or deformed pellet will pass the pellet presence verification if the size (e.g., diameter) of the misshapen pellet nonetheless falls within the specified range. Accordingly, as an additional check for detecting misshapen pellets, the vision sensor system may perform a pellet perimeter verification. As part of a pellet perimeter verification, the vision sensor camera 160 and vision sensor system may be used to check the perimeter of the pellets 102 to detect any pellet abnormalities by checking whether any outer edge of the pellet falls outside a predefined, expected perimeter of the pellet. For example, the vision sensor system 160 may perform an image processing algorithm to detect the edges of an object and measure the perimeter in units such as pixels or units of length, e.g., millimeters. If the vision sensor system 160 detects more than one object, it may return individual perimeters for each object.

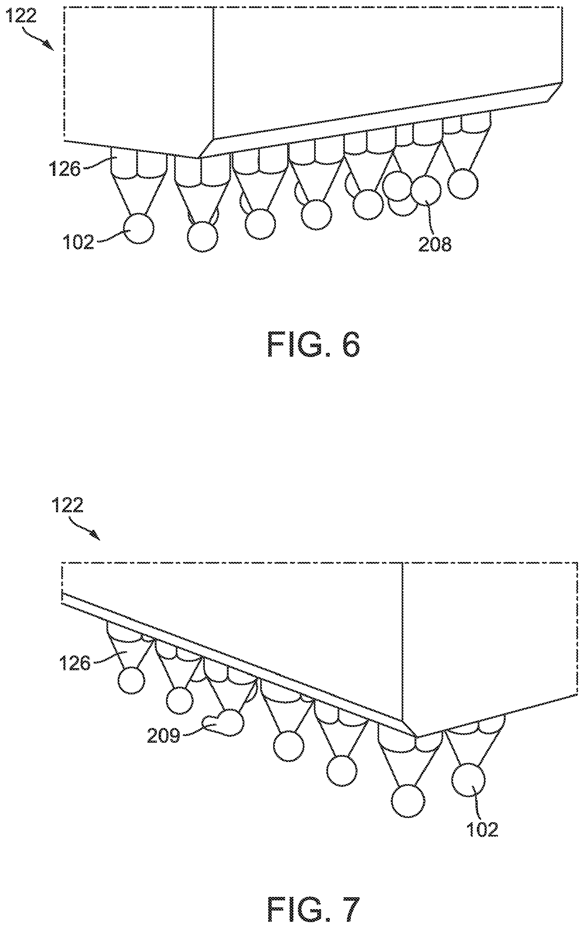

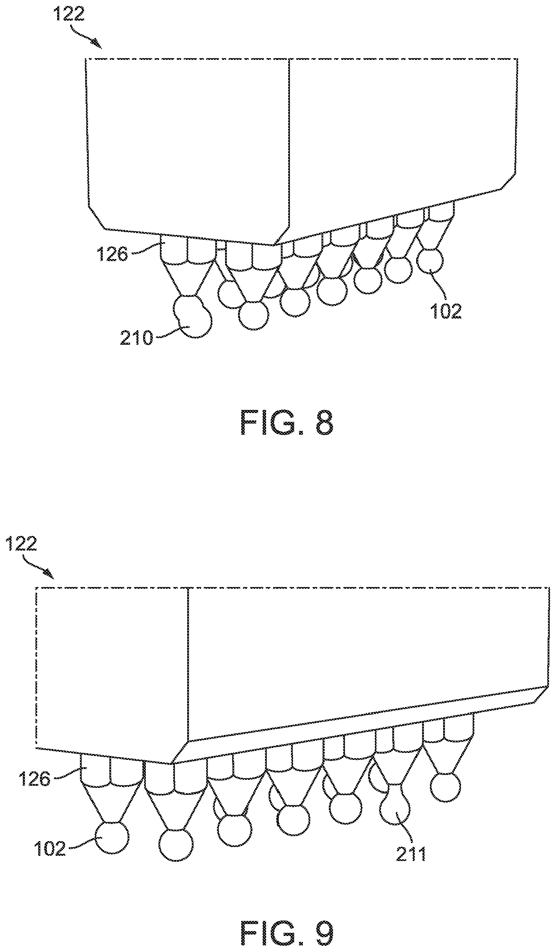

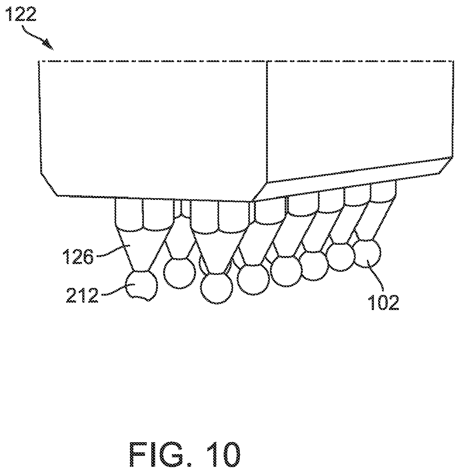

FIGS. 6-9 illustrate examples of pellet abnormalities that may be detected by the vision sensor system 160. Each of FIGS. 6-9 is a perspective view of a pellet transfer head 122 with a pellet 102 on each vacuum nozzle 126, but one of the pellets has an abnormality. FIG. 6 illustrates a cluster of pellets 208 - for example, stuck together by static charge -attached to one vacuum nozzle. FIG. 7 illustrates an abnormal pellet 209 - comprising a normal pellet and a second, smaller pellet (a "satellite") fused together - attached to one vacuum nozzle. FIG. 8 illustrates an abnormal pellet 210 - comprising two, generally normal-sized pellets fused together - attached to one vacuum nozzle. FIG. 9 illustrates an abnormal pellet 211 - comprising an elongated pellet -attached to one vacuum nozzle. FIG. 10 illustrates an abnormal pellet 212 - comprising a chipped pellet - attached to one vacuum nozzle.

Since the images taken by the vision sensor camera 160 are two-dimensional, some pellet abnormalities may go undetected by a vision sensor system employing a single vision sensor camera 160 if the abnormality is not visible in the plane of the field of view of the single camera. Accordingly, system 100 may include one or more additional vision sensor cameras (not shown) at different orientations that perform vision checks (e.g., diameter and/or perimeter measurements) from a perspective different from that of the single vision sensor camera 160.

When a vision system check relating to pellets on the pellet transfer head 122 fails, i.e., a pellet is missing from one or more vacuum nozzles and/or one or more pellets is abnormal, the system 100 may generate an alarm, or other error notification, and the pellet transfer head 122 may be returned to the pellet supply reservoir 108 to pick up a new group of pellets.

As part of a full cartridge verification after a pellet transfer cycle, the horizontal actuator system 190 is controlled/instructed to move the horizontal carriage assembly 106 to position the cartridge support 110 of the carriage assembly 106 beneath the vision sensor camera 160 (see FIG. 14A), and the vision sensor system and vision sensor camera 160 may be used to check that each well 114 in the cartridge 112 contains a pellet 102. Again, leveraging a color contrast between the pellets 102 and the cartridge 112, the filled cartridge verification may be performed, for example, by checking the relative brightness levels within each of the cartridge wells 114 to determine if a pellet 102 is present in the well. For example, if the vision sensor system 160 determines that one or more wells 114 has an average brightness level lower than a predefined threshold or is not substantially different from the average brightness of other wells 114, the vision sensor system 160 may indicate that the associated well(s) do not contain a pellet, and the cartridge 112 is not full. The filled cartridge verification passes if none of the cartridge wells 114 are empty. Otherwise, if one of the wells 114 is not confirmed to be loaded with a pellet (e.g., if the brightness in one or more wells does not match the specified brightness level), the filled cartridge verification fails.

### Static Eliminator Fan

The system 100 may include a static eliminator fan 214 to reduce or eliminate static electricity that can cause individual pellets 102 to stick together and form clusters due to static charge attraction. The static eliminator fan 214 may be mounted (e.g., via a bracket (not shown)) in a fixed position and orientation with respect to the back plate 104 separate from the vertical carriage assembly 120 and in a position that will not interfere with the vertical movement of the vertical carriage assembly 120. The static eliminator fan 214 may optionally be fixed with respect to the vertical carriage assembly 120 to be moveable in vertical direction toward or way from the pellet supply reservoir 108. For example, the static eliminator fan 214 may be mounted to the vertical carriage mount 150 or to the transfer head mounting bracket 144 adjacent to the pellet transfer head 122. The static eliminator fan 214 may include an ion generator that produces positively or negatively charged ions and may also include a sensor built into the static eliminator fan 124 to detect the level of charge in front of the static eliminator fan 124. For example, the ion generator may produce more or less positively or negatively charged ions to neutralize the charge based on the level of charge detected by the sensor. Alternatively, or in addition, to using a static eliminator fan, the pellet supply reservoir 108 may comprise a grounded stainless steel structure to minimize or eliminate static charge.

### Humidity-Sensitive Reagent Pellets

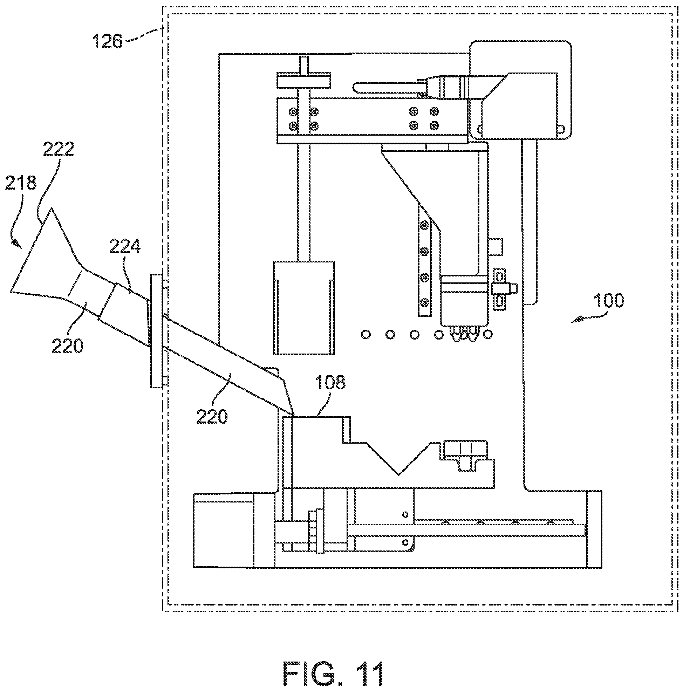

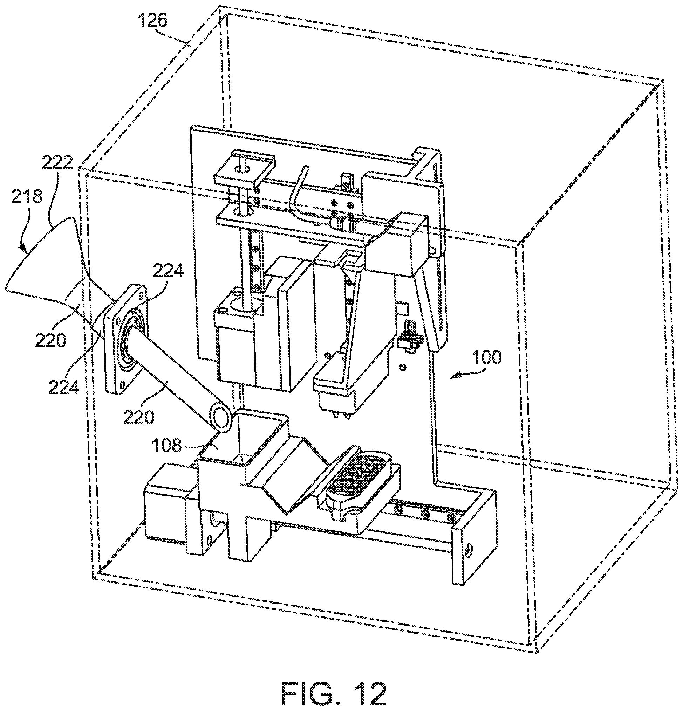

FIGS. 11 and 12 illustrate an implementation of the automated system 100 for loading solid reagent pellets into wells of a cartridge for use with humidity-sensitive pellets 102. Some pellets 102, such as lyophilized reagent pellets, may rapidly degrade in the presence of moisture. When handing such humidity-sensitive pellets 102, the system 100 may be housed in a low-humidity environment to reduce or prevent degradation of the pellets 102. The system 100 may be placed in a dry environment, such as the interior of an environmentally-controlled housing, such as a gas-purge desiccator cabinet 216, that is substantially sealed from ambient conditions. Although FIGS. 11 and 12 show the entire system 100 within the housing 216, to minimize pellet exposure to humid conditions, it is import that at least the pellet supply reservoir 108, the cartridge support 110 (and any cartridge 112 supported thereby), and the pellet transfer head 122 are disposed within the housing 216.

In an embodiment, dry nitrogen (N2) gas may be pumped under pressure into the cabinet 216 in order to remove moisture and/or desiccant pouches may be placed in the cabinet 216 to absorb moisture from the air inside the cabinet 216. Once an acceptable level of humidity is achieved, the humidity level may be maintained by continuing to pump a small amount of nitrogen (N2) gas at a low pressure into the cabinet 216. Once the system 100 has reached the desired humidity level, the cabinet 216 cannot be opened without having to repeat the process of removing moisture from within the cabinet 216.

A pellet insertion tube 218 may be used to add pellets 102 to the pellet supply reservoir 108 without opening the cabinet 216 and while maintaining a low-humidity environment inside the cabinet 216. The pellet insertion tube 218 maybe include a pipe 220 extending through an opening in a wall of the cabinet 216 with a proximal end of the pipe 220 situated outside the housing 216 and a distal end of the pipe 220 situated inside the housing 216, a funnel attachment 222 at the proximal end of the pipe 220, and a bracket 224 to hold the pipe at an incline with respect to the cabinet wall. The bracket 224 may be mounted with O-rings within the cabinet wall opening to create an airtight seal. Pellets 102 may be added to the pellet supply reservoir 108 by sliding the pipe 220 through the bracket 224 and pouring pellets 102 into the funnel attachment 222. Once pellets 102 have been added to the pellet supply reservoir 108, the pipe 220 may be removed from the bracket 224 and the opening may be closed with a rubber stopper, spring-loaded shutter, or other closure to prevent moisture from entering the cabinet 216.

### Defective Pellet Removal

As noted above, when a vision system check relating to pellets on the pellet transfer head 122 fails, the pellet transfer head 122 may be returned to the pellet supply reservoir 108 to pick up a new group of pellets. In this case, the pellets currently held to the pellet transfer head 122 may be returned to the pellet supply reservoir 108 with the hope that one or more pellet transfer cycles will pass without the abnormal pellets being picked up by the pellet transfer head 122 again. Alternatively, if there is a vision system failure error, the pellets may be deposited in a second pellet supply reservoir (e.g., a waste pellet reservoir, not shown) before the pellet transfer head 122 is returned to the pellet supply reservoir 108 to pick up a new group of pellets.

The system may optionally include means to remove individual pellets 102 from vacuum nozzles 126. Such means may include one or more inverted vacuum nozzles (not shown) for removing pellets 102 from the vacuum nozzles 126 of the pellet transfer head 122. The one or more inverted vacuum nozzles may be positionable with respect to the pellet transfer head 122 (e.g., in horizontal X and Y directions) and may be configured to generate a vacuum that is greater than the vacuum generated at the vacuum nozzle 126 so that it can remove a pellet held on the vacuum nozzle 126. The pellet transfer head 122 - now with pellets missing from one or more vacuum nozzles - can be returned to the pellet supply reservoir 108 to pick up pellets at the one or more vacuum nozzles. Alternatively, all remaining pellets on the pellet transfer head 122 may be released into the pellet supply reservoir 108 prior to picking up an entirely new group of pellets.

### Control Architecture

FIG. 13 is a block diagram that schematically illustrates a control architecture for the automated system 100 for loading solid reagent pellets into wells of a cartridge. An exemplary control architecture may include a controller 300, which monitors, communicates with, and controls aspects of the system 100, including a pneumatics system 206, the vision sensor system, including the vision sensor camera 160, the vertical actuator system 170, horizontal actuator system 190, and a power supply 304 that is controllable by the controller 300. In this regard, for the controller 300 to be "connected" to another component means that signals, data, and/or power are transmitted between the controller 300 and the component to which it is connected, either directly or through, or via, one or more intermediate components or other controllers.

Controller 300 may comprise a computer system for executing software (which may include firmware) that effects operation, control, and monitoring of the components of the system 100. Controller 300 may be implemented via one or more logic elements, e.g., a computer, embedded controller, programmable gate array, application specific integrated circuit, programmable logic device, etc., and may include or access data storage memory 302, which may include random access memory (RAM), read only memory (ROM), flash memory, and other types of memory now known or later developed. Controller 300 may also include additional memory, including, for example, a hard disk drive and/or a removable storage drive, representing a magnetic tape drive, an optical disk drive, USB slot, memory card interface, internet memory, cloud-based memory, or any storage medium or format now known or later developed. Memory devices and storage units used herein may comprise any storage medium for persistent and/or volatile storage of electronic data now known or later developed. Such data may be stored within the storage medium in a database, which may comprise any data structure and format now known or later developed, including, for example, a relational database, an object database, a flat file, list, and so on, or some combination thereof.

In alternative embodiments, some or all of the memory may include other similar means for allowing computer programs or other executable instructions to be loaded into a computer system. Such means can include, for example, a removable storage unit and an interface. Examples of such can include a memory stick and memory stick interface, a secure digital card and interface, and other portable media and interfaces which allow software and data to be transferred to controller 300.

Software/firmware comprises instructions stored on non-transitory computer-readable media, which, when executed by the logic element(s) of the controller 300, cause the control and computing hardware to perform one or more automated or semi-automated processes.

The computer system of controller 300 may also include a communications interface, which allows information (e.g., power, control and feedback signals, software, data, etc.) to be transferred between controller 300 and external devices. Examples of communications interfaces can include wired and wireless communications formats, such as a modem, a network interface (such as an Ethernet card), a serial interface (e.g., RS-232, RS-485, 12C, SPI, etc.), a communications port, a PCMCIA slot and card, a USB-port, a Firewire port, digital I/O, CAN Bus, Bluetooth, cloud-based, or any interface now known or later developed. Information transferred via a communications interface is in the form of signals, which can be electronic, electromagnetic, optical, or other signals, capable of being received and transmitted by the communications interface.

The computer system of controller 300 can also include one or more input devices, including active input device(s), such as, a touch screen, stylus, keyboard, mouse or other pointing device, microphone, data scanners (e.g., barcode, RFID, etc.), and so on and/or passive input device(s), such as, sensors, switches, encoders, and so on. Various output devices may also be included in the computer system, including indicator lights, a display, printer, tactile (e.g., vibratory) indicators, and audio speakers.

In this document, terms such as "computer program medium," "computer-readable medium," "computer usable medium," and the like are used to generally refer to media, such as removable storage units, a hard disk installed in hard disk drive, and other means for providing software or firmware and data to controller 300.

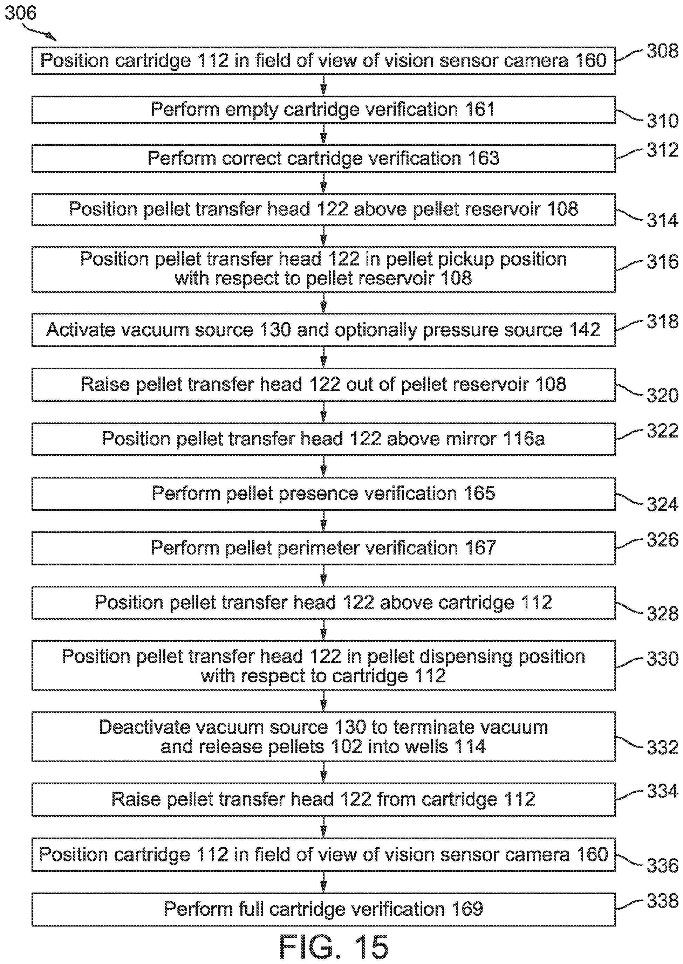

Software embodied in computer programs (also called computer control logic) may be stored in one or more portions of memory 302, including firmware, that is part of or accessed by controller 300. Computer programs can also be received via a communications interface. Such computer programs may include algorithms, such as algorithm 306 shown in FIG. 15 and described below, that, when executed, enable the computer system of controller 300 to control the operation of the system 100 in accordance with aspects disclosed herein. Computer logic functionality and/or memory may also be embodied in whole or in part within one or more of the systems 160, 170, 190, 206 connected to controller 300.

In an embodiment in which aspects of the subject matter disclosed herein are implemented using software, the software may be stored in a computer program product and loaded into the computer system of controller 300 using a removable storage drive, a hard drive, an interface, and/or a communications interface. The control logic (software), when executed by the processor of the controller 300, causes the processor to perform functional aspects of the subject matter as described herein via the systems, devices, apparatuses, sensors, switches, etc. described above. An operating system may perform basic tasks such as recognizing input from an input device and/or signal from one or more sensors, sending output to an output device, managing data and system resources, signal processing, and managing the various processes embodying computer programs running on the computer system.

Controller 300 may comprise a stand-alone system dedicated to system 100, or one or more components of controller 300 - e.g., processor, memory, interfaces, input/output devices, etc. - may be a shared part of a global controller that controls one or more components of an instrument or laboratory, of which the automated solid reagent cartridge loading system 100 is a part, in addition to the system 100 itself.

As shown in FIG. 13, controller 300 is connected to, and receives signals from, a pneumatic system 206 of the system 100, including pumps, valves (e.g., solenoid valves) and sensors associated with a pressure source 142 pneumatically connected to the pellet transfer head 122 and pumps, valves (e.g., solenoid valves) and sensors associated with a vacuum source 130 pneumatically connected to the pellet transfer head 122. In an embodiment, when transferring pellets from the pellet supply reservoir 108 to the cartridge 112, controller 300 transmits signals that control pumps, valves, and/or sensors operatively associated with the pressure source 142 to selectively apply positive pressure to the pressure ports 140 or vacuum ports 128 of the vacuum nozzles 126 or to terminate pressure at the pressure ports 140 or vacuum ports 128. Similarly, controller 300 transmits signals that control pumps, valves, and/or sensors operatively associated with the vacuum source 130 to selectively apply negative pressure (e.g., a vacuum) to the associated vacuum ports 128 or to terminate negative pressure at the vacuum ports 128.

As shown in FIG. 13, controller 300 is connected to, and receives signals from, vertical actuator system 170. In particular, controller 300 sends command, or instruction, signals to vertical actuator motor 172 to selectively operate the vertical actuator motor 172 to rotate lead screw 174 and move the vertical carriage assembly 120 up or down along the tracks 176. Controller 300 may also receive feedback signals from a rotary encoder associated with vertical actuator motor 172 and/or lead screw 174 and may receive signals from position (vertical home) sensor 181 to monitor and control movement and positioning of the vertical carriage assembly 120.

Controller 300 is connected to, and receives signals from, horizontal actuator system 190. In particular, controller 300 sends command signals to horizontal actuator motor 192 to selectively operate the horizontal actuator motor 192 to rotate lead screw 194 and move the horizontal carriage assembly 106 along the tracks 196. Controller 300 may also receive feedback signals from a rotary encoder associated with horizontal actuator motor 192 and/or lead screw 194 and may receive signals from position (home) sensor 201 to monitor and control movement and positioning of the horizontal carriage assembly 106.

As shown in FIG. 13, controller 300 is connected to, and receives signals from, vision sensor camera 160 of the vision sensor system. In accordance with instructions from an operating algorithm executed by the controller 300, such as algorithm 306 described below, controller 300 sends commands to the vision sensor system 160 to perform one or more of the empty cartridge verification 161, correct cartridge verification 163, pellet presence verification 165, pellet perimeter verification 167, and full cartridge verification 169. Commands from the controller 300 to the vision sensor system 160 may be in accordance with an algorithm and may also be in accordance with, and coordinated with, motor commands to and position signals from the vertical actuator system 170 relating to the positioning of the vertical carriage assembly 120 and/or motor commands to and position signals from the horizontal actuator system 190 relating to the positioning of the horizontal carriage assembly 106.

### Exemplary Processes

Details of operation and a process embodying aspects of the present disclosure are represented by algorithm 306 in FIG. 15 comprising a sequence of process steps or executable commands or instructions. The following algorithm is exemplary. Other steps or commands may be performed and/or the steps or commands shown herein and described below may be modified, *e.g.*, by omitting and/or reordering certain steps or commands. The steps or commands described below illustrate exemplary steps in a cycle of the pellet transfer process. A "cycle" refers to the process of transferring a single set of pellets 102 from the pellet supply reservoir 108 to the plurality of wells 114 in the cartridge 112. FIGS. 14A-14F show the system 100 at different stages of the exemplary process.

A supply of pellets is place into the pellet supply reservoir 108, and, before each cycle begins, an empty cartridge 112 is placed in the cartridge support 110. The algorithm is described below as a sequence of process steps, although it is to be understood that each process step may also be thought of an executable command of a control algorithm executed by controller 300.

At step 308 of control algorithm 306, the cartridge 112 carried on the cartridge support 110 is positioned within the field of view of the vision sensor camera 160. Controller 300 activates horizontal actuator motor 192 of horizontal actuator system 190 to move the horizontal carriage assembly 106 along the horizontally-oriented linear track 196 until horizontal carriage assembly 106 is at the horizontal home position, as confirmed by a signal from position sensor 201, at which point the cartridge 112 is beneath the vision sensor camera 160. FIG. 14A, which does not include the static eliminator fan 214, shows the system 100 as positioned after step 306, with the cartridge 112 positioned beneath the vision sensor camera 160.

At step 310 of control algorithm 306, controller 300 instructs the vision sensor system 160 to perform an empty cartridge verification 161 to confirm that each well 114 of the cartridge 112 is empty.

At step 312 of control algorithm 306, controller 300 instructs the vision sensor system 160 to perform a correct cartridge verification 163 to determine whether a cartridge 112 has the correct label, has the correct number and arrangement of wells 114, or otherwise determine that the correct cartridge has been placed on the cartridge support 110.

One reason for performing step 310 is to ensure that a previously-loaded cartridge is replaced with an empty cartridge prior to commencing a subsequent pellet transfer cycle. Step 310, however, may be omitted, and is thus optional, if there is no concern that a previously loaded cartridge is replaced with an empty cartridge - e.g., because of some other control process that prevents such an occurrence.

One reason for performing step 312 is if more than one, differently-configured cartridge would fit in the cartridge support 110, but only one cartridge configuration is the correct one, step 312 determine whether the correct cartridge has been placed in the cartridge support 110. Step 312, however, may be omitted, and is thus optional, if there is no concern that an incorrect cartridge configuration is placed into the cartridge support 110 - e.g., because there is only one cartridge configuration (the correct cartridge configuration) that will fit in cartridge support 110.

If both steps 310 and 312 are omitted, step 308 too may be omitted.

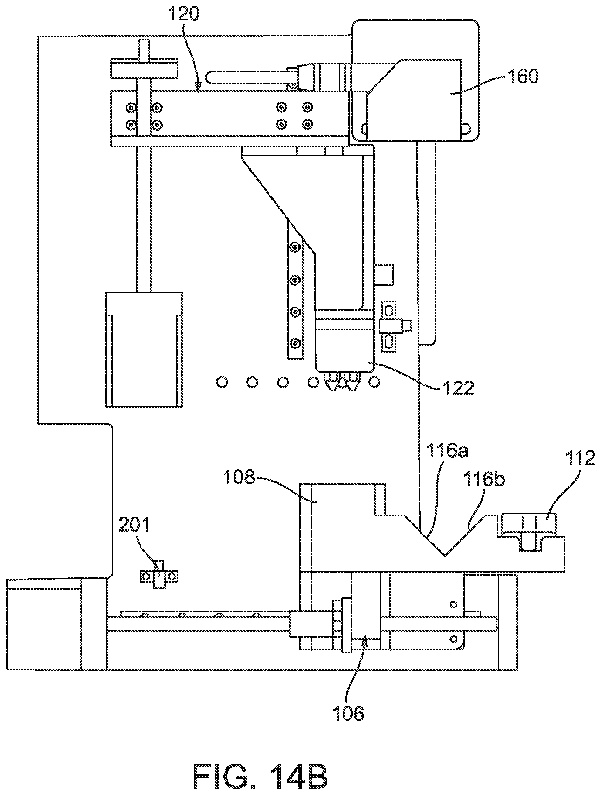

At step 314 of control algorithm 306, the pellet transfer head 122 is positioned above the pellet supply reservoir 108. Controller 300 activates horizontal actuator motor 192 of horizontal actuator system 190 for a specified number of motor steps (or encoder counts) to move the horizontal carriage assembly 106 along the horizontally-oriented linear track 196 for a specified distance from the horizontal home position until the pellet supply reservoir 108 is positioned beneath the pellet transfer head 122. FIG. 14B, which does not include the static eliminator fan 214, shows the system 100 as positioned after step 314, with pellet transfer head 122 positioned above pellet supply reservoir 108.

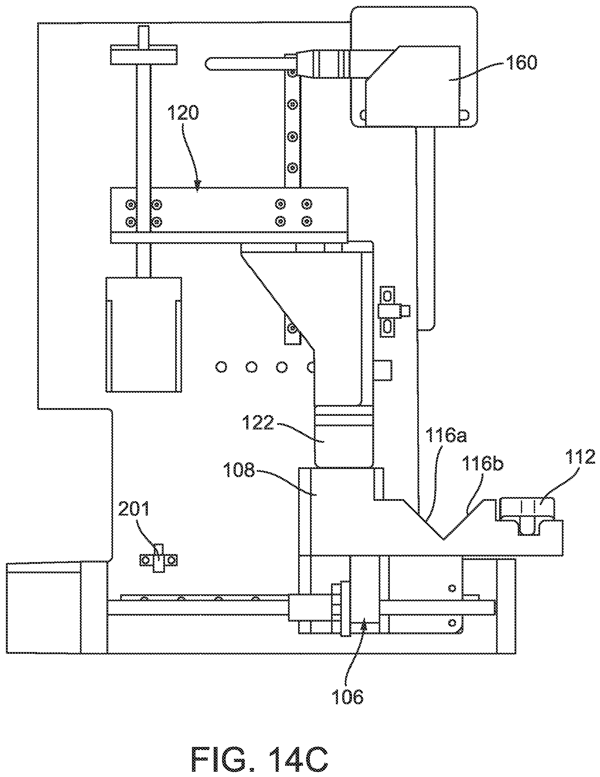

At step 316 of control algorithm 306, the pellet transfer head 122 is positioned at a pellet pickup position with respect to the pellet supply reservoir 108. Controller 300 activates vertical actuator motor to 172 of vertical actuator system 170 for a specified number of motor steps (or encoder counts) to move the vertical carriage assembly 120 downwardly along the vertically-oriented linear tracks 176 for a specified distance from the vertical home position to move the pellet transfer head 122 to a pellet pickup position with respect to the pellet supply reservoir 108 (e.g., at a specified distance above the top layer of pellets in the pellet supply reservoir 108). FIG. 14C, which does not include the static eliminator fan 214, shows the system 100 as positioned after step 316, with pellet transfer head 122 lowered into pellet supply reservoir 108.

The level of the top layer of pellets 102 changes with each cycle of transfer process. In one embodiment, controller 300 accounts for the change in pellet 102 height in the pellet supply reservoir 108 by moving the pellet transfer head 122 to a lower position with respect to the pellet supply reservoir 108 after each successive pellet transfer cycle so as to maintain a preferred spacing between the ends of the vacuum nozzles 126 and the tops of the pellets 102. The change in pellet 102 height in the pellet supply reservoir 108 after each pellet transfer cycle may be determined based on the volume of pellets 102 removed in each cycle and the dimensions of the pellet supply reservoir 108. In one illustrative, but non-limiting, example, to maintain a desired spacing of 5 mm ± 1 mm between the ends of the vacuum nozzles 126 and the top layer of pellets 102 within the pellet supply reservoir 108, the pellet transfer head 122 is lowered an additional 0.28575 mm with each pellet transfer cycle (1500 micro-steps of vertical stepper motor 172).

At step 318 of control algorithm 306, controller 300 activates the vacuum source 130 of the pneumatic system 206 to apply a vacuum at the vacuum port 128 of each of the plurality of vacuum nozzles 126 to draw a pellet 102 to each vacuum nozzle 126. Optionally, controller 300 also activates the pressure source 142 of the pneumatic system 206 to supply pressurized gas (e.g., about 10 psi) through the pressure ports 140 in the pellet transfer head 122 to fluidize the pellets 102 in the pellet supply reservoir 108 and float the pellets 102 up to the vacuum nozzles 126.

If positive gas flow is applied to the pressure ports 140, after a specified dwell time, e.g., 2.5 seconds, controller 300 deactivates pressure source 142 of the pneumatic system 206, to terminate gas flow through the pressure ports 140 in the transfer head 122, while maintaining activation of the vacuum source 130 to keep pellets 102 retained at the vacuum nozzles 126. Alternatively, the positive pressure flow can be terminated after a pellet 102 is attached to each vacuum nozzle 126 (e.g., as detected by the flow sensors that detect a change (i.e., reduction) in gas flow after each vacuum port 128 is blocked by a pellet 102 attached to the associated vacuum nozzle 126) or after the pellet transfer head 122 is raised from the pellet supply reservoir 108 (after a specified dwell time or after a pellet is attached to each vacuum nozzle 126).

At step 320 of control algorithm 306, the pellet transfer head 122 is raised out of the pellet supply reservoir 108. Controller 300 activates vertical actuator motor 172 of the vertical actuator system 170 to move the vertical carriage assembly 120 upwardly along the vertically-oriented linear tracks 176 and move the pellet transfer head 122 out of the pellet supply reservoir 108. Vertical actuator motor 172 may be activated for a specified number of motor steps (or encoder counts) to raise the vertical carriage assembly 120 and the pellet transfer head 122 a specified distance above the pellet supply reservoir 108. Alternatively, the vertical actuator motor 172 may be activated to raise the vertical carriage assembly 120 and the pellet transfer head 122 until the vertical carriage assembly 120 reaches the vertical home position, as confirmed by a signal from position sensor 181.

At step 322 of control algorithm 306, the pellet transfer head 122 is positioned with respect to the one or more mirrors 116 such that the pellet transfer head 122 is within the field of view of the vision sensor camera 160. In one embodiment, the pellet transfer head is positioned above mirror 116a so as to be in the field of view of the vision sensor camera 160 positioned over mirror 116b. Controller 300 activates horizontal actuator motor 192 of horizontal actuator system 190 for a specified number of motor steps (or encoder counts), thereby causing the horizontal carriage assembly 106 to move along the horizontally-oriented linear track 196 until the pellet transfer head 122 is positioned above mirror 116a.

In some embodiments, step 322 may also include lowering the pellet transfer head 170 with respect to the mirrors 116. Controller 300 activates vertical actuator motor to 172 of vertical actuator system 170 for a specified number of motor steps (or encoder counts), thereby causing the vertical carriage assembly 120 to move downwardly along the vertically-oriented linear tracks 176 for a specified distance from the vertical home position to move the pellet transfer head 122 to a vision sensing position with respect to the vision sensor camera 160. FIG. 14D, which does not include the static eliminator fan 214, shows the system 100 as positioned after step 322, with pellet transfer head 122 at a vision sensing position with respect to mirror 116a.

At step 324 of control algorithm 306, controller 300 instructs the vision sensor system 160 to perform a pellet presence verification 165 to determine whether a pellet 102 is present at each nozzle 126 and whether each pellet has a size (e.g., diameter) that falls within a specified size range.

At step 326 of control algorithm 306, controller 300 instructs the vision sensor system 160 to perform a pellet perimeter verification 167 to confirm that each pellet 102 falls within a specified perimeter range.

If one or more nozzles 126 do not have pellets 102 attached, or if one or more pellets 102 fail the pellet size or perimeter verification, the algorithm 306 may optionally repeat steps 314-326 until each nozzle 126 has a pellet 102 having a diameter within the specified diameter range and no pellet abnormalities are detected.

In embodiments comprising inverted vacuum nozzle(s) for removing individual pellets 102 from vacuum nozzles 126, any pellets 102 failing the pellet size and/or the pellet perimeter verification may be removed from the vacuum nozzles 126 by the one or more inverted nozzles prior to algorithm 306 repeating steps 314-326.

In embodiments where the actuator system 170 lowers the pellet transfer head 122 towards the one or more mirrors 116 during step 322, controller 300 causes the vertical actuator system 170 to raise the pellet transfer head 122 away from the one or more mirrors 116 after the vision sensor system 160 completes the pellet perimeter verification at step 326 of control algorithm 306. The vertical actuator motor 172 may be activated for a specified number of steps (or encoder counts) to raise the vertical cartridge assembly 120 a specified distance, or the vertical actuator motor 172 may be activated to raise the vertical carriage assembly 120 and the pellet transfer head 122 until the vertical carriage assembly 120 reaches the vertical home position, as confirmed by a signal from position sensor 181.

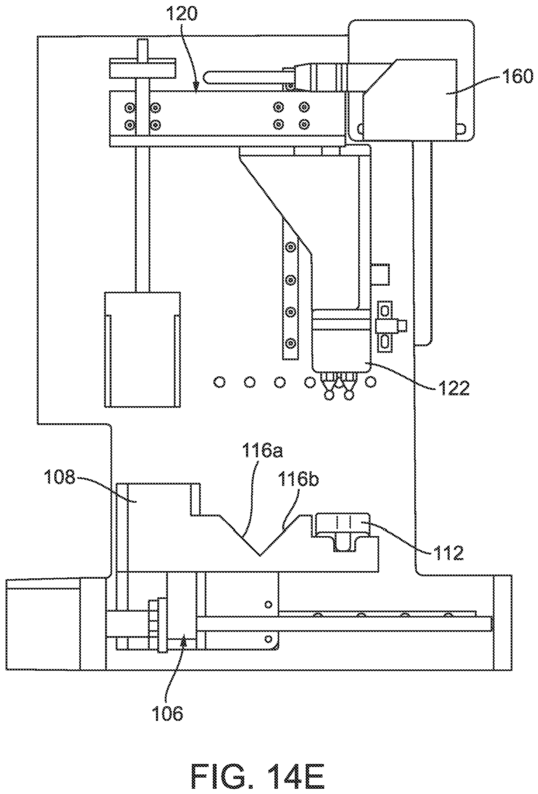

At step 328 of control algorithm 306, the pellet transfer head 122 is positioned above the cartridge 112. Controller 300 activates horizontal actuator motor 192 of actuator system 190 for a specified number of motor steps (or encoder counts) to move carriage assembly 106 along the horizontally-oriented linear track 196 until the cartridge 112 is beneath the pellet transfer head 122 such that each of the plurality of vacuum nozzles 126 is aligned with a corresponding well 114 of the cartridge 112. FIG. 14E shows the system 100 as positioned after step 328, with pellet transfer head 122 positioned above cartridge 112.

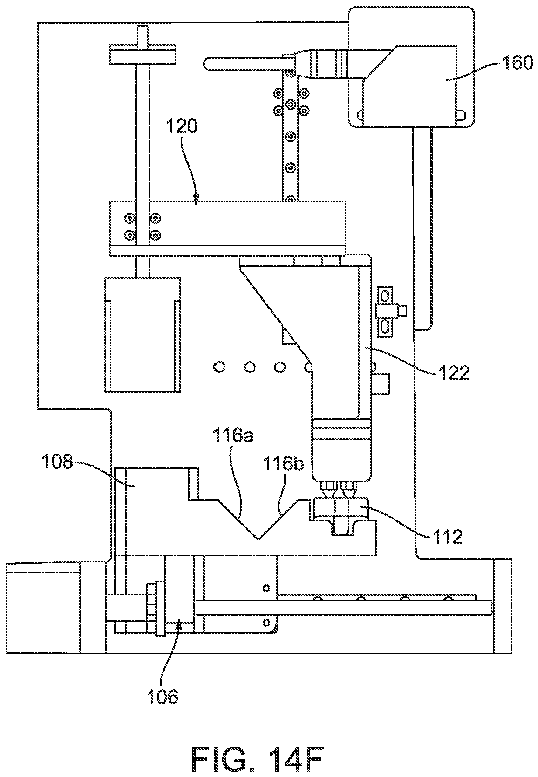

At step 330 of control algorithm 306, the pellet transfer head 122 is positioned in a pellet dispensing position with respect to the cartridge 112. Controller 300 activates vertical actuator motor 172 of the vertical actuator system 170 for a specified number of motor steps (or encoder counts) to move the vertical carriage assembly 120 downwardly along the vertically-oriented linear tracks 176 for a specified distance from the vertical home position until each of the vacuum nozzles 126 is near or within an associated one of the plurality of wells 114 of the cartridge 112. FIG. 14F, which does not include the static eliminator fan 214, shows the system 100 as positioned after step 330, with pellet transfer head 122 in a pellet dispensing position with respect to the cartridge 112.

At step 332 of control algorithm 306, the controller 300 deactivates the vacuum source 130 of the pneumatic system 206 to terminate the vacuum at the vacuum ports 128 of the plurality of vacuum nozzles 126 to dispense, or release, the pellet 102 from each vacuum nozzle into each associated well 114 of the cartridge 112. Step 332 may optionally include controller 300 activating pressure source 142 of pneumatic system 206 to direct gas at positive pressure through the vacuum ports 128 to ensure that the pellet attached to each vacuum nozzle 126 is released into an associated well 114.

At step 334 of control algorithm 306, the pellet transfer head 122 is raised away from the cartridge 112. Controller 300 activates vertical actuator motor 172 of the vertical actuator system 170 to move the vertical carriage assembly 120 upwardly along the vertically-oriented linear tracks 176 and move the pellet transfer head 122 away from the cartridge 112. Vertical actuator motor 172 may be activated for a specified number of motor steps (or encoder counts) to raise the vertical carriage assembly 120 and the pellet transfer head 122 a specified distance above the cartridge 112. Alternatively, the vertical actuator motor 172 may be activated to raise the vertical carriage assembly120 and the pellet transfer head 122 until the vertical carriage assembly 120 reaches the vertical home position, as confirmed by a signal from position sensor 181.

At step 336 of control algorithm 306, the cartridge 112 carried on the cartridge support 110 is again positioned within the field of view of the vision sensor camera 160. Controller 300 activates horizontal actuator motor 192 of horizontal actuator system 190 to move the horizontal carriage assembly 106 along the horizontally-oriented linear track 196 until horizontal carriage assembly 106 is at the horizontal home position, as confirmed by a signal from position sensor 201, at which point the cartridge 112 is beneath the vision sensor camera 160. FIG. 14A, which does not include the static eliminator fan 214, shows the system 100 as positioned after step 336, with the cartridge 112 positioned beneath the vision sensor camera 160.

At step 338 of control algorithm 306, controller 300 instructs the vision sensor system 160 to perform a full cartridge verification 169 to confirm that each well 114 of the cartridge 112 contains a pellet.

The filled cartridge 112 is then removed from the cartridge support 110, an empty cartridge 112 is placed in the cartridge support 110, and steps 308-338 are repeated for the next cartridge.

### Exemplary Embodiments

Embodiment 1 A system for automatically supplying a dried reagent pellet to each well of a cartridge comprising a plurality of wells, wherein the system comprises: a pellet supply reservoir containing a supply of dried reagent pellets; a cartridge support configured to hold a cartridge; a pellet transfer head disposed above the pellet supply reservoir and a cartridge disposed on the cartridge support, wherein the pellet transfer head comprises a plurality of vacuum nozzles and the number and arrangement of the vacuum nozzles corresponds to the number and arrangement of wells of the cartridge, and wherein each vacuum nozzle comprises a downwardly-facing vacuum port in selective communication with a vacuum source; a vertical actuator system configured to selectively move the pellet transfer head up or down; a vision sensor system including a vision sensor camera, wherein the vision sensor camera is disposed above the pellet supply reservoir and the cartridge disposed on the cartridge support; a horizontal actuator system configured to effect relative horizontal movement of the vision sensor camera and the pellet transfer head with respect to the pellet supply reservoir and the cartridge support; and a controller connected to the vacuum source, the pressure source, the vertical actuator system, the horizontal actuator system, and the vision sensor system, wherein the controller is configured to execute operational commands of a control algorithm, wherein the operational commands comprise: (A) activate the horizontal actuator system to position the pellet transfer head above the pellet supply reservoir; (B) after command (A), activate the vertical actuator system to lower the pellet transfer head to a pellet pickup position with respect to the pellet supply reservoir; (C) with the pellet transfer head in the pellet pickup position, activate the vacuum source to create a vacuum at each vacuum port to draw a pellet from the pellet supply reservoir to each vacuum port; (D) after command (C), activate the vertical actuator system to raise the pellet transfer head from the pellet pickup position with respect to the pellet supply reservoir; (E) after command (D), activate the horizontal actuator system to position the pellet transfer head within a field of view of the vision sensor camera; (F) after command (E), activate the vision sensor system to detect whether a dried reagent pellet is disposed at each of the vacuum nozzles; (G) after command (F), activate the horizontal actuator system to position the pellet transfer head above the cartridge so that each vacuum nozzle is aligned with a corresponding well of the cartridge; (H) after command (G), activate the vertical actuator system to lower the pellet transfer head to a pellet dispensing position with respect to the cartridge; and (I) after command (H), deactivate the vacuum source to terminate the vacuum at each vacuum port to release the pellet from each vacuum nozzle into the corresponding well of the cartridge.

Embodiment 2 The system of embodiment 1, wherein the pellet transfer head further comprises one or more downwardly-facing pressure ports in selective communication with a pressure source, and wherein the controller is connected to the pressure source and wherein the operational commands further comprise, during command (E), activate the pressure source to supply gas flow at the one or more pressure ports of the pellet transfer head to fluidize the supply of pellets within the pellet supply reservoir.

Embodiment 3 The system of embodiment 2, wherein the operational commands further comprise, before command (D), deactivate the pressure source to terminate gas flow at the pressure ports.

Embodiment 4The system of any one of embodiments 1-3, wherein the operational commands further comprise, before command (G): (J) activate the horizontal actuator system to position the cartridge within the field of view of the vision sensor camera; and (K) activate the vision sensor system to detect at least one of (1) whether each well of the cartridge is empty, and (2) whether a correct cartridge is placed in the cartridge support.

Embodiment 5 The system of any one of embodiments 1-4, further comprising a static eliminator fan.

Embodiment 6 The system of any one of embodiments 1-5, wherein the pellet supply reservoir and the cartridge support are supported on a horizontal carriage assembly supported for horizontal movement on one or more horizontal tracks, and wherein the horizontal actuator system comprises a horizontal actuator motor, a horizontal lead screw operatively coupled to the horizontal actuator motor, and a lead screw nut attached to the horizontal carriage assembly and coupled to the horizontal lead screw.

Embodiment 7 The system of embodiment 6, further comprising a horizontal home sensor configured to detect when the horizontal carriage assembly is in a horizontal home position.

Embodiment 8 The system of any one of embodiments 1-7, wherein the pellet transfer head is supported on a vertical carriage assembly supported for vertical movement on one or more vertical tracks, and wherein the vertical actuator system comprises a vertical actuator motor, a vertical lead screw operatively coupled to the vertical actuator motor, and a lead screw nut attached to the vertical carriage assembly and coupled to the vertical lead screw.

Embodiment 9 The system of embodiment 8, wherein the vertical carriage assembly comprises: a vertical carriage mount supported on the one or more vertical tracks by a linear slide associated with each vertical track; and a transfer head mounting bracket attached to the vertical carriage mount, wherein the pellet transfer head is attached to the transfer head mounting bracket.

Embodiment 10 The system of embodiment 8 or 9, further comprising a vertical home sensor configured to detect when the vertical carriage assembly is in a vertical home position.

Embodiment 11 The system of any one of embodiments 1-10, wherein the vision sensor camera has a downward field of view, and the system further comprises an upwardly-facing mirror disposed beneath the vision sensor camera and the pellet transfer head, and wherein the pellet transfer head is within the field of view of the vision sensor camera when the pellet transfer head is positioned above a first portion of the mirror while a second portion of the mirror is within the field of view of the vision sensor camera.

Embodiment 12 The system of embodiment 11, wherein the first portion of the mirror comprises a first mirror and the second portion of the mirror comprises a second mirror disposed at an angle with respect to the first mirror.

Embodiment 13 The system of any one of embodiments 1-12, wherein the plurality of vacuum nozzles of the pellet transfer head are arranged in at least two rows of vacuum nozzles, each row comprising a plurality of vacuum nozzles.

Embodiment 14 The system of any one of embodiments 1-13, further comprising an environmentally-controlled housing, wherein at least the pellet supply reservoir, the cartridge support, and the pellet transfer head are disposed within the housing.

Embodiment 15 The system of embodiment 14, further comprising a pellet insertion tube comprising: a pipe extending through a wall of the housing with a proximal end of the pipe situated outside the housing and a distal end of the pipe situated inside the housing; a funnel attachment at a proximal end of the pipe; and a bracket attached the wall of the housing for holding the pipe at an incline.

Embodiment 16 The system of any one of embodiments 1-15, wherein the vision sensor system is configured to detect whether more than one dried reagent pellet, a misshapen dried reagent pellet, or a broken dried reagent pellet is disposed at any of the vacuum nozzles, and command (F) includes activating the vision sensor camera and the vision system to detect whether more than one dried reagent pellet, a misshapen dried reagent pellet, or a broken dried reagent pellet is disposed at any of the vacuum nozzles.

Embodiment 17 A method for automatically supplying a dried reagent pellet to each well of a cartridge comprising a plurality of wells, wherein the method comprises: (A) automatically positioning a pellet transfer head above a pellet supply reservoir containing a supply of dried reagent pellets, wherein the pellet transfer head comprises a plurality of vacuum nozzles, wherein the number and arrangement of the vacuum nozzles corresponds to the number and arrangement of wells of the cartridge and wherein each vacuum nozzle comprises a downwardly-facing vacuum port in selective communication with a vacuum source; (B) after step (A), automatically lowering the pellet transfer head to a pellet pickup position with respect to the pellet supply reservoir; (C) with the pellet transfer head in the pellet pickup position, activating the vacuum source to create a vacuum at each vacuum port to draw a pellet from the pellet supply reservoir to each vacuum port; (D) after step (C), automatically raising the pellet transfer head from the pellet pickup position with respect to the pellet supply reservoir; (E) after step (D), automatically positioning the pellet transfer head within a field of view of a vision sensor camera; (F) after step (E), activating the vision sensor camera and a vision sensor system to detect whether a dried reagent pellet is disposed at each of the vacuum nozzles; (G) after step (F), automatically positioning the pellet transfer head above the cartridge so that each vacuum nozzle is aligned with a corresponding well of the cartridge; (H) after step (G), automatically lowering the pellet transfer head to a pellet dispensing position with respect to the cartridge; and (I) after step (H), deactivating the vacuum source to terminate the vacuum at each vacuum port to release the pellet from each vacuum nozzle into the corresponding well of the cartridge.

Embodiment 18 The method of embodiment 17, wherein the pellet transfer head further comprises one or more downwardly-facing pressure ports in selective communication with a pressure source, and wherein the method further comprises, during step (C), activating the pressure source to supply gas flow at the one or more pressure ports of the pellet transfer head to fluidize the supply of pellets within the pellet supply reservoir.

Embodiment 19 The method of embodiment 18, wherein further comprising, before step (D), deactivating the pressure source to terminate gas flow at the pressure ports.

Embodiment 20 The method of any one of embodiments 17-19, further comprising, before step (G): (J) automatically positioning the cartridge within the field of view of the vision sensor camera; and (K) activating the vision sensor system to detect at least one of (1) whether each well of the cartridge is empty, and (2) whether a correct cartridge is placed in the cartridge support.

Embodiment 21 The method of any one of embodiments 17-20, further comprising directing a static eliminator fan at the pellet supply reservoir.

Embodiment 22 The method of any one of embodiments 17-21, wherein the cartridge is supported on a cartridge support, and wherein the pellet supply reservoir and the cartridge support are supported on a horizontal carriage assembly supported for horizontal movement on one or more horizontal tracks, and steps (A), (E), and (G) comprise moving the horizontal carriage assembly by rotating a horizontal lead screw with a horizontal actuator motor, wherein the horizontal lead screw is operatively coupled to a lead screw nut attached to the horizontal carriage assembly.

Embodiment 23 The method of embodiment 22, further comprising detecting when the horizontal carriage assembly is in a horizontal home position with a horizontal home sensor.

Embodiment 24 The method of any one of embodiments 17-23, wherein the pellet transfer head is supported on a vertical carriage assembly supported for vertical movement on one or more vertical tracks, and wherein steps (B), (D), and (H) comprise moving the vertical carriage assembly by rotating a vertical lead screw with a vertical actuator motor, wherein the vertical lead screw is operatively coupled to a lead screw nut attached to the vertical carriage assembly.

Embodiment 25 The method of embodiment 24, further comprising detecting when the vertical carriage assembly is in a vertical home position with a vertical home sensor.

Embodiment 26 The method of any one of embodiments 17-25, wherein step (E) comprises automatically positioning the pellet transfer head above a first portion of a mirror while a second portion of the mirror is within the field of view of the vision sensor camera, and wherein the first portion of the mirror comprises a first mirror and the second portion of the mirror comprises a second mirror disposed at an angle with respect to the first mirror.

Embodiment 27 The method of any one of embodiments 17-26, wherein the plurality of vacuum nozzles of the pellet transfer head are arranged in at least two rows of vacuum nozzles, each row comprising a plurality of vacuum nozzles.

Embodiment 28 The method of any one of embodiments 17-27, wherein at least the pellet supply reservoir, the cartridge support, and the pellet transfer head are disposed within an environmentally-controlled housing, and wherein the method further comprises transferring pellets from outside the housing to the pellet supply reservoir within the housing.

Embodiment 29 The method of embodiment 28, further comprising transferring pellets from outside the housing to the pellet supply reservoir within the housing with a pellet insertion tube, wherein the pellet insertion tube comprises: a pipe extending through a wall of the housing with a proximal end of the pipe situated outside the housing and a distal end of the pipe situated inside the housing; a funnel attachment at a proximal end of the pipe; and a bracket attached the wall of the housing for holding the pipe at an incline.

Embodiment 30 The method of any one of embodiments 17-29, wherein step (F) further comprises activating the vision sensor camera and the vision sensor system to detect whether more than one dried reagent pellet, a misshapen dried reagent pellet, or a broken dried reagent pellet is disposed at any of the vacuum nozzles.

While the subject matter of this disclosure has been described and shown in considerable detail with reference to certain illustrative embodiments, including various combinations and sub-combinations of features, those skilled in the art will readily appreciate other embodiments and variations and modifications thereof as encompassed within the scope of the present disclosure. Moreover, the descriptions of such embodiments, combinations, and sub-combinations is not intended to convey that the claimed subject matter requires features or combinations of features other than those expressly recited in the claims. Accordingly, the scope of this disclosure is intended to include all modifications and variations encompassed within the scope of the following appended claims.

The further aspects of the present disclosure are set forth in the following numbered paragraphs:
1 A system for automatically supplying a dried reagent pellet to each well of a cartridge comprising a plurality of wells, wherein the system comprises:
   a pellet supply reservoir containing a supply of dried reagent pellets;
   a cartridge support configured to hold a cartridge;
   a pellet transfer head disposed above the pellet supply reservoir and a cartridge disposed on the cartridge support, wherein the pellet transfer head comprises a plurality of vacuum nozzles and the number and arrangement of the vacuum nozzles corresponds to the number and arrangement of wells of the cartridge, and wherein each vacuum nozzle comprises a downwardly-facing vacuum port in selective communication with a vacuum source;
   a vertical actuator system configured to selectively move the pellet transfer head up or down;
   a vision sensor system including a vision sensor camera, wherein the vision sensor camera is disposed above the pellet supply reservoir and the cartridge disposed on the cartridge support;
   a horizontal actuator system configured to effect relative horizontal movement of the vision sensor camera and the pellet transfer head with respect to the pellet supply reservoir and the cartridge support; and
   a controller connected to the vacuum source, the pressure source, the vertical actuator system, the horizontal actuator system, and the vision sensor system, wherein the controller is configured to execute operational commands of a control algorithm, wherein the operational commands comprise:
      (A) activate the horizontal actuator system to position the pellet transfer head above the pellet supply reservoir;
      (B) after command (A), activate the vertical actuator system to lower the pellet transfer head to a pellet pickup position with respect to the pellet supply reservoir;
      (C) with the pellet transfer head in the pellet pickup position, activate the vacuum source to create a vacuum at each vacuum port to draw a pellet from the pellet supply reservoir to each vacuum port;
      (D) after command (C), activate the vertical actuator system to raise the pellet transfer head from the pellet pickup position with respect to the pellet supply reservoir;
      (E) after command (D), activate the horizontal actuator system to position the pellet transfer head within a field of view of the vision sensor camera;
      (F) after command (E), activate the vision sensor system to detect whether a dried reagent pellet is disposed at each of the vacuum nozzles;
      (G) after command (F), activate the horizontal actuator system to position the pellet transfer head above the cartridge so that each vacuum nozzle is aligned with a corresponding well of the cartridge;
      (H) after command (G), activate the vertical actuator system to lower the pellet transfer head to a pellet dispensing position with respect to the cartridge; and
      (I) after command (H), deactivate the vacuum source to terminate the vacuum at each vacuum port to release the pellet from each vacuum nozzle into the corresponding well of the cartridge.
2 The system of paragraph 1, wherein the pellet transfer head further comprises one or more downwardly-facing pressure ports in selective communication with a pressure source, and wherein the controller is connected to the pressure source and wherein the operational commands further comprise, during command (E), activate the pressure source to supply gas flow at the one or more pressure ports of the pellet transfer head to fluidize the supply of pellets within the pellet supply reservoir.
3 The system of paragraph 2, wherein the operational commands further comprise, before command (D), deactivate the pressure source to terminate gas flow at the pressure ports.
4 The system of any one of paragraphs 1-3, wherein the operational commands further comprise, before command (G):
   (J) activate the horizontal actuator system to position the cartridge within the field of view of the vision sensor camera; and
   (K) activate the vision sensor system to detect at least one of (1) whether each well of the cartridge is empty, and (2) whether a correct cartridge is placed in the cartridge support.
5 The system of any one of paragraphs 1-4, further comprising a static eliminator fan.
6 The system of any one of paragraphs 1-5, wherein the pellet supply reservoir and the cartridge support are supported on a horizontal carriage assembly supported for horizontal movement on one or more horizontal tracks, and wherein the horizontal actuator system comprises a horizontal actuator motor, a horizontal lead screw operatively coupled to the horizontal actuator motor, and a lead screw nut attached to the horizontal carriage assembly and coupled to the horizontal lead screw.
7 The system of paragraph 6, further comprising a horizontal home sensor configured to detect when the horizontal carriage assembly is in a horizontal home position.
8 The system of any one of paragraphs 1-7, wherein the pellet transfer head is supported on a vertical carriage assembly supported for vertical movement on one or more vertical tracks, and wherein the vertical actuator system comprises a vertical actuator motor, a vertical lead screw operatively coupled to the vertical actuator motor, and a lead screw nut attached to the vertical carriage assembly and coupled to the vertical lead screw.
9 The system of paragraph 8, wherein the vertical carriage assembly comprises:
   a vertical carriage mount supported on the one or more vertical tracks by a linear slide associated with each vertical track; and
   a transfer head mounting bracket attached to the vertical carriage mount, wherein the pellet transfer head is attached to the transfer head mounting bracket.
10 The system of paragraph 8 or 9, further comprising a vertical home sensor configured to detect when the vertical carriage assembly is in a vertical home position.
11 The system of any one of paragraphs 1-10, wherein the vision sensor camera has a downward field of view, and the system further comprises an upwardly-facing mirror disposed beneath the vision sensor camera and the pellet transfer head, and wherein the pellet transfer head is within the field of view of the vision sensor camera when the pellet transfer head is positioned above a first portion of the mirror while a second portion of the mirror is within the field of view of the vision sensor camera.
12 The system of paragraph 11, wherein the first portion of the mirror comprises a first mirror and the second portion of the mirror comprises a second mirror disposed at an angle with respect to the first mirror.
13 The system of any one of paragraphs 1-12, wherein the plurality of vacuum nozzles of the pellet transfer head are arranged in at least two rows of vacuum nozzles, each row comprising a plurality of vacuum nozzles.
14 The system of any one of paragraphs 1-13, further comprising an environmentally-controlled housing, wherein at least the pellet supply reservoir, the cartridge support, and the pellet transfer head are disposed within the housing.
15 The system of paragraph 14, further comprising a pellet insertion tube comprising:
   a pipe extending through a wall of the housing with a proximal end of the pipe situated outside the housing and a distal end of the pipe situated inside the housing;
   a funnel attachment at a proximal end of the pipe; and
   a bracket attached the wall of the housing for holding the pipe at an incline.
16 The system of any one of paragraphs 1-15, wherein the vision sensor system is configured to detect whether more than one dried reagent pellet, a misshapen dried reagent pellet, or a broken dried reagent pellet is disposed at any of the vacuum nozzles, and command (F) includes activating the vision sensor camera and the vision system to detect whether more than one dried reagent pellet, a misshapen dried reagent pellet, or a broken dried reagent pellet is disposed at any of the vacuum nozzles.
17 A method for automatically supplying a dried reagent pellet to each well of a cartridge comprising a plurality of wells, wherein the method comprises:
   (A) automatically positioning a pellet transfer head above a pellet supply reservoir containing a supply of dried reagent pellets, wherein the pellet transfer head comprises a plurality of vacuum nozzles, wherein the number and arrangement of the vacuum nozzles corresponds to the number and arrangement of wells of the cartridge and wherein each vacuum nozzle comprises a downwardly-facing vacuum port in selective communication with a vacuum source;
   (B) after step (A), automatically lowering the pellet transfer head to a pellet pickup position with respect to the pellet supply reservoir;
   (C) with the pellet transfer head in the pellet pickup position, activating the vacuum source to create a vacuum at each vacuum port to draw a pellet from the pellet supply reservoir to each vacuum port;
   (D) after step (C), automatically raising the pellet transfer head from the pellet pickup position with respect to the pellet supply reservoir;
   (E) after step (D), automatically positioning the pellet transfer head within a field of view of a vision sensor camera;
   (F) after step (E), activating the vision sensor camera and a vision sensor system to detect whether a dried reagent pellet is disposed at each of the vacuum nozzles;
   (G) after step (F), automatically positioning the pellet transfer head above the cartridge so that each vacuum nozzle is aligned with a corresponding well of the cartridge;
   (H) after step (G), automatically lowering the pellet transfer head to a pellet dispensing position with respect to the cartridge; and
   (I) after step (H), deactivating the vacuum source to terminate the vacuum at each vacuum port to release the pellet from each vacuum nozzle into the corresponding well of the cartridge.
18 The method of paragraph 17, wherein the pellet transfer head further comprises one or more downwardly-facing pressure ports in selective communication with a pressure source, and wherein the method further comprises, during step (C), activating the pressure source to supply gas flow at the one or more pressure ports of the pellet transfer head to fluidize the supply of pellets within the pellet supply reservoir.
19 The method of paragraph 18, wherein further comprising, before step (D), deactivating the pressure source to terminate gas flow at the pressure ports.
20 The method of any one of paragraphs 17-19, further comprising, before step (G):
   (J) automatically positioning the cartridge within the field of view of the vision sensor camera; and
   (K) activating the vision sensor system to detect at least one of (1) whether each well of the cartridge is empty, and (2) whether a correct cartridge is placed in the cartridge support.
21 The method of any one of paragraphs 17-20, further comprising directing a static eliminator fan at the pellet supply reservoir.
22 The method of any one of paragraphs 17-21, wherein the cartridge is supported on a cartridge support, and wherein the pellet supply reservoir and the cartridge support are supported on a horizontal carriage assembly supported for horizontal movement on one or more horizontal tracks, and steps (A), (E), and (G) comprise moving the horizontal carriage assembly by rotating a horizontal lead screw with a horizontal actuator motor, wherein the horizontal lead screw is operatively coupled to a lead screw nut attached to the horizontal carriage assembly.
23 The method of paragraph 22, further comprising detecting when the horizontal carriage assembly is in a horizontal home position with a horizontal home sensor.
24 The method of any one of paragraphs 17-23, wherein the pellet transfer head is supported on a vertical carriage assembly supported for vertical movement on one or more vertical tracks, and wherein steps (B), (D), and (H) comprise moving the vertical carriage assembly by rotating a vertical lead screw with a vertical actuator motor, wherein the vertical lead screw is operatively coupled to a lead screw nut attached to the vertical carriage assembly.
25 The method of paragraph 24, further comprising detecting when the vertical carriage assembly is in a vertical home position with a vertical home sensor.
26 The method of any one of paragraphs 17-25, wherein step (E) comprises automatically positioning the pellet transfer head above a first portion of a mirror while a second portion of the mirror is within the field of view of the vision sensor camera, and wherein the first portion of the mirror comprises a first mirror and the second portion of the mirror comprises a second mirror disposed at an angle with respect to the first mirror.
27 The method of any one of paragraphs 17-26, wherein the plurality of vacuum nozzles of the pellet transfer head are arranged in at least two rows of vacuum nozzles, each row comprising a plurality of vacuum nozzles.
28 The method of any one of paragraphs 17-27, wherein at least the pellet supply reservoir, the cartridge support, and the pellet transfer head are disposed within an environmentally-controlled housing, and wherein the method further comprises transferring pellets from outside the housing to the pellet supply reservoir within the housing.
29 The method of paragraph 28, further comprising transferring pellets from outside the housing to the pellet supply reservoir within the housing with a pellet insertion tube, wherein the pellet insertion tube comprises:
   a pipe extending through a wall of the housing with a proximal end of the pipe situated outside the housing and a distal end of the pipe situated inside the housing;
   a funnel attachment at a proximal end of the pipe; and
   a bracket attached the wall of the housing for holding the pipe at an incline.
30 The method of any one of paragraphs 17-29, wherein step (F) further comprises activating the vision sensor camera and the vision sensor system to detect whether more than one dried reagent pellet, a misshapen dried reagent pellet, or a broken dried reagent pellet is disposed at any of the vacuum nozzles.

## Claims

1. A method for automatically supplying a dried reagent pellet (102) to each well (114) of a cartridge (112) comprising a plurality of wells, wherein the method comprises:
(A) automatically positioning a pellet transfer head (122) above a pellet supply reservoir (108) containing a supply of dried reagent pellets, wherein the pellet transfer head comprises (i) a plurality of vacuum nozzles (126), wherein each vacuum nozzle comprises a downwardly-facing vacuum port (128) in selective communication with a vacuum source (130) and wherein the number and arrangement of the vacuum nozzles corresponds to the number and arrangement of wells of the cartridge and (ii) one or more downwardly-facing pressure ports (140) in selective communication with a pressure source (142);
(B) after step (A), automatically lowering the pellet transfer head to a pellet pickup position with respect to the pellet supply reservoir;
(C) with the pellet transfer head in the pellet pickup position, activating the pressure source to supply gas flow at the one or more pressure ports of the pellet transfer head to fluidize the supply of pellets within the pellet supply reservoir and activating the vacuum source to create a vacuum at each vacuum port to draw a pellet from the pellet supply reservoir to each vacuum port;
(D) after step (C), automatically raising the pellet transfer head from the pellet pickup position with respect to the pellet supply reservoir;
(E) after step (D), automatically positioning the pellet transfer head within a field of view of a vision sensor camera (160);
(F) after step (E), activating the vision sensor camera and a vision sensor system to detect whether a dried reagent pellet is disposed at each of the vacuum nozzles;
(G) after step (F), automatically positioning the pellet transfer head above the cartridge so that each vacuum nozzle is aligned with a corresponding well of the cartridge;
(H) after step (G), automatically lowering the pellet transfer head to a pellet dispensing position with respect to the cartridge; and
(I) after step (H), deactivating the vacuum source to terminate the vacuum at each vacuum port to release the pellet from each vacuum nozzle into the corresponding well of the cartridge.

2. The method of claim 1, wherein further comprising, before step (D), deactivating the pressure source to terminate gas flow at the pressure ports.

3. The method of claim 1 or claim 1, wherein the cartridge is supported on a cartridge support (110), and wherein the method further comprises, before step (G):
(J) automatically positioning the cartridge within the field of view of the vision sensor camera; and
(K) activating the vision sensor system to detect at least one of (1) whether each well of the cartridge is empty, and (2) whether a correct cartridge is placed in the cartridge support.

4. The method of any one of claims 1-3, further comprising directing a static eliminator fan (214) at the pellet supply reservoir to reduce static buildup in the pellet supply reservoir.

5. The method of claim 1 or claim 2, wherein the cartridge is supported on a cartridge support, and wherein the pellet supply reservoir and the cartridge support are supported on a horizontal carriage assembly (106) supported for horizontal movement on one or more horizontal tracks (196), and steps (A), (E), and (G) comprise moving the horizontal carriage assembly by rotating a horizontal lead screw (194) with a horizontal actuator motor (192), wherein the horizontal lead screw is operatively coupled to a lead screw nut (204) attached to the horizontal carriage assembly.

6. The method of claim 5, further comprising detecting when the horizontal carriage assembly is in a horizontal home position with a horizontal home sensor (201).

7. The method of any one of claims 1-6, wherein the pellet transfer head is supported on a vertical carriage assembly (120) supported for vertical movement on one or more vertical tracks (176), and wherein steps (B), (D), and (H) comprise moving the vertical carriage assembly by rotating a vertical lead screw (174) with a vertical actuator motor (172), wherein the vertical lead screw is operatively coupled to a lead screw nut (175) attached to the vertical carriage assembly.

8. The method of claim 27, further comprising detecting when the vertical carriage assembly is in a vertical home position with a vertical home sensor (181).

9. The method of any one of claims 1-8, wherein step (E) comprises automatically positioning the pellet transfer head above a first portion (116a) of a mirror (116) while a second portion (116b) of the mirror is within the field of view of the vision sensor camera, and wherein the first portion of the mirror comprises a first mirror (116a) and the second portion of the mirror comprises a second mirror (116b) disposed at an angle with respect to the first mirror.

10. The method of any one of claims 1-9, wherein the plurality of vacuum nozzles of the pellet transfer head are arranged in at least two rows of vacuum nozzles, each row comprising a plurality of vacuum nozzles.

11. The method of any one of claims 1-10, wherein at least the pellet supply reservoir, the cartridge support, and the pellet transfer head are disposed within an environmentally-controlled housing (216), and wherein the method further comprises transferring pellets from outside the housing to the pellet supply reservoir within the housing.

12. The method of claim 11, further comprising transferring pellets from outside the housing to the pellet supply reservoir within the housing with a pellet insertion tube (218), wherein the pellet insertion tube comprises:
a pipe (220) extending through a wall of the housing with a proximal end of the pipe situated outside the housing and a distal end of the pipe situated inside the housing;
a funnel attachment (222) at a proximal end of the pipe; and
a bracket (224) attached the wall of the housing for holding the pipe at an incline.

13. The method of any one of claims 1-12, wherein step (F) further comprises activating the vision sensor camera and the vision sensor system to detect whether more than one dried reagent pellet, a misshapen dried reagent pellet, or a broken dried reagent pellet is disposed at any of the vacuum nozzles.
